Europäisches Patentamt

(19) European Patent Office

Office européen des brevets

(11) Numéro de publication: **0 021 948**
**B1**

(12) **FASCICULE DE BREVET EUROPEEN**

(45) Date de publication du fascicule du brevet:
01.02.84

(51) Int. Cl.³: **H 04 N 7/13**, G 06 F 15/20

(21) Numéro de dépôt: **80400841.5**

(22) Date de dépôt: **10.06.80**

(54) Dispositif pour le suivi et l'estimation récursive de l'état local des contours d'images et application à la prédiction adaptative en codage différentiel de signaux de télévision.

(30) Priorité. 29.06.79 FR 7916914

(43) Date de publication de la demande:
07.01.81 **Bulletin 81/1**

(45) Mention de la délivrance du brevet:
01.02.84 **Bulletin 84/5**

(84) Etats contractants désignés:
**BE CH DE GB IT LI NL SE**

(56) Documents cités:
**DE - A - 2 309 444**
**FR - A - 2 277 482**
**GB - A - 2 001 503**

**IEEE Transactions on Communications, Vol. COM.25. No 11 Novembre 1977, pp 1295-1302**

(73) Titulaire: **L'Etat Français représenté par le Secrétaire d'Etat aux Postes et Télécommunications, (Centre National d'Etudes des Télécommunications) 38-40 rue du Général Leclerc, F-92131 Issy-les-Moulineaux (FR)**
Titulaire: **Etablissement Public de Diffusion dit "Télédiffusion de France", 21-27 rue Barbès, F-92120 Montrouge (FR)**

(72) Inventeur: **Richard, Christian, 19, Ruelle Degland, F-35000 Rennes (FR)**
Inventeur: **Kretz, Francis, 5, rue de la Croix Connue, F-35510 Cesson-Sevigne (FR)**
Inventeur: **Benveniste, Albert, 25, rue Camille Pelletan, F-35100 Rennes (FR)**

(74) Mandataire: **Mongrédien, André et al, c/o BREVATOME 25, rue de Ponthieu, F-75008 Paris (FR)**

# 0 021 948

Dispositif pour le suivi et l'estimation récursive de l'état local des contours d'images et application à la prédiction adaptative en codage différentiel de signaux de télévision

La présente invention a pour objet un dispositif pour le suivi et l'estimation récursive de l'état local des contours d'images, notamment en vue d'une prédiction adaptative pour le codage différentiel des signaux de télévision.

Le codage utilisant la modulation d'impulsions codées différentielles (en abrégé MICD, ou en anglais DPCM) a déjà fait l'objet de nombreuses études publiées notamment dans les articles suivants:

- »Predictive Quantizing Systems (Differential Pulse Code Modulation) for the Transmission of Television Signals« par J. B. O'Neal, paru dans la revue américaine »Bell System Technical Journal«, vol. 45, pages 689 à 721, mai 1966,
- »Système de codage numérique de l'image de télévision — le projet OCCITAN« par J. PONCIN et J. SABATIER, paru dans la revue française »L'écho des recherches«, janvier 1976, pages 28 à 37,
- »Dégradation des signaux d'images et qualité subjective en codage numérique: visibilité du flottement de contour« par F. KRETZ et J. L. BOUDEVILLE, paru dans la revue française »Annales des Télécommunications«, tome 31, n° 9—10, septembre-octobre 1976.

Dans le codage MICD, on code la différence entre la valeur réelle d'un échantillon de signal de télévision et une prédiction (estimation) de cette valeur calculée à partir d'échantillons codés voisins antérieurs. Cette différence est quantifiée et codée. La caractéristique de quantification a fait l'objet de nombreuses études. Classiquement, elle est unique et symétrique par rapport à la valeur O, mais d'autres types de quantification ont été envisagés, qui sont décrits par exemple dans les documents suivants:

- Brevet français 2 408 945, publié le 8. 6. 1979, »compression et expansion (quantification) de signaux numériques de télévision à codage différentiel«, inventeurs MM. F. KRETZ et J. L. BOUDEVILLE,
- »Optimization of DPCM video scheme using subjective quality criterions«, par F. KRETZ, J. L. BOUDEVILLE et P. SALLIO, paru dans les comptes-rendus »IERE Conference«, n° 37, septembre 1977 pages 185—194,
- Premier certificat d'addition au brevet 2 408 945 cité ci-dessus; inventeurs MM. F. KRETZ et J. L. BOUDEVILLE, N° 2 443 769, publié apies la date de dèpôt de la plesente demande, le 4. 7. 1980,
- »Ein DPCM-System mit zweidimensionalem Prädictor und gesteuertem Quantisierer«, par T. KUMMEROW, paru dans les comptes-rendus »TAGUNGSBERICHT NTG-FACHTAGUNG: Signalverarbeitung«, avril 1973, ERLANGEN, pages 425—439,
- »Adaptive Quantization of Picture Signals using Spatial Masking«, par A. NETRAVALI et B. PRAVADA, paru dans la revue américaine »Proceedings of IEEE«, avril 1977, pages 536—548.

En ce qui concerne la transmission numérique d'un signal de télévision, l'Union Européenne de Radiodiffusion a prévu d'utiliser un système de transmission normalisé par le CCITT à un débit de 34 Meb/s. On a pu réaliser un tel système en codant séparément les composantes et en utilisant l'invention décrite dans le premier additif au brevet mentionné ci-dessus, pour le codage du signal de luminance. On a ainsi obtenu une bonne qualité des images restituées.

Pour cette application, il est utile d'essayer d'améliorer encore la qualité obtenue, par un codage plus complexe. Pour d'autres applications, il peut être utile de diminuer le débit à la valeur minimale possible selon les méthodes classiques, en conservant une qualité donnée.

Plusieurs études ont été menées dans ce but, conduisant à une prédiction adaptative. On peut citer par exemple les articles suivants:

- »Predictive Quantizing of Television signals« par R. E. GRAHAM, paru dans les comptes-rendus de »IRE Wescon Convention record«, volume 2, partie 4, 1958, pages 147 à 157,
- »DPCM Picture Coding with Adaptive Prediction« par W. ZSCHUNKE, paru dans la revue américaine »IEEE Tr. on Com.«, volume COM 25, n° 11, novembre 1977, pages 1295 à 1302.

Dans ces études, la prédiction est sélectionnée parmi plusieurs prédictions, chacune correspondant à la valeur d'un point voisin antérieur du point à coder ou à une combinaison linéaire simple des valeurs de points voisins antérieurs du point à coder. Chaque prédiction est adaptée à une orientation locale donnée de l'image (c'est-à-dire au cas d'un contour de cette orientation passant à proximité du point à coder). Un organe de décision estime l'orientation locale et choisit en conséquence la prédiction appropriée. Les deux dernières études citées ci-dessus utilisent des estimations basées sur des tests simples sur les différences entre points voisins antérieurs au point à coder.

L'invention porte avant tout sur le suivi et l'estimation récursive de l'état local des contours d'une image, que celle-ci soit, ou non, une image de télévision. L'invention porte également sur l'utilisation du suivi et de l'estimation pour la prédiction adaptative des contours d'une image.

2

Un des buts visés par la présente invention est donc l'amélioration de l'estimation de l'orientation locale pour accroître la qualité des images de télévision restituées après un codage numérique à un débit de 34 Meb/s. Un autre but de la présente invention est l'utilisation du même principe pour diminuer le débit de systèmes de transmission numérique d'images, en conservant à ces images une qualité adéquate.

Avant de définir l'invention, quelques définitions seront données à propos de notions et de grandeurs relatives aux images traitées.

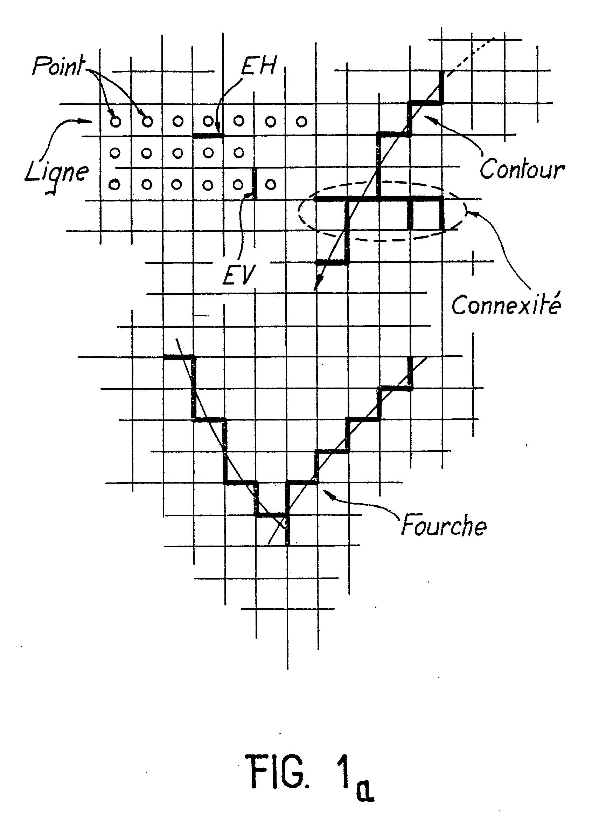

L'invention s'applique essentiellement aux images formées de lignes de points équidistants disposés aux centres de rectangles formés par un double faisceau de lignes orthogonales, répartition qui est classiquement dénommée »structure d'échantillonnage orthogonale«. L'invention s'applique également au cas d'une »structure d'échantillonnage en quinconce-trame« (voir l'article de J. SABATIER et F. KRETZ intitulé: »L'échantillonnage des composantes du signal de télévision en couleur à 625 lignes« (»Sampling the components of 625-line colour television signals«) publié dans la revue technique de l'UER n° 171, oct. 1978, p. 212 à 225). La figure 1a illustre cette structure. Toutes les lignes de points sont supposées contenir N points, qui seront, dans le cas de l'application aux images de télévision, les N points formant une ligne du signal vidéo, le nombre de lignes dépendant du standard adopté. Chaque point de la ligne est caractérisé par une grandeur optique, soit la luminance, soit la chromaticité, soit tout autre signal de ce genre (par exemple le signal de luminance ou les signaux de différence). Cette grandeur est déterminée par un signal électrique échantillonné noté X avec différents indices ou accents.

Lorsque deux points adjacents présentent une différence d'amplitude qui excède un certain seuil, on observe un »élément de contour d'image«, cet élément étant horizontal si les deux points sont l'un au-dessus de l'autre et vertical si les deux points sont l'un à côté de l'autre. Chaque élément de contour sera représenté, comme sur la figure 1a, par un trait disposé entre les deux points en question et sera noté EH pour les premiers et EV pour les seconds.

Deux éléments de contour, horizontaux ou verticaux, sont dits connexes si deux de leurs extrémités sont connectées. On définit alors un contour par un ensemble d'éléments de contour connexes, ou par l'ensemble des points qui leur sont adjacents. La courbe moyenne du contour représente en quelque sorte le lieu des points de même amplitude, par exemple de même intensité lumineuse. Le contour représenté à titre d'exemple sur la figure 1a comprend 6 éléments de contour verticaux et 4 éléments de contour horizontaux.

Un tel contour présente en tout point une orientation moyenne qui est donnée par la tangente à la courbe moyenne du contour. Cette orientation sera prise par rapport à la verticale et notée $\Theta$. Un des objets e l'invention concerne l'estimation de cette orientation à chaque ligne.

Naturellement, tous les éléments de contour d'une image ne sont pas nécessairement connexes et certains peuvent être isolés. Dans le suivi de ligne à ligne des contours et leur observation à chaque ligne, on s'intéressera aux éléments de contour appartenant à une même ligne et qui sont connexes. De tels éléments forment des ensembles dénommés »zones connexes« ou »connexités«. La figure 1a représente une telle connexité, considérée comme partie intégrante d'un contour. Elle commence par un premier élément de contour (dans le cas illustré, il s'agit d'un élément horizontal) et se termine par un dernier élément de contour (en l'occurrence, un élément de contour vertical). Ce dernier élément indique la fin d'une zone connexe. Un point de l'image peut appartenir à une connexité. Dans la cas contraire, il est situé dans un »trou«.

A la ligne courante, le »passé« du contour observé est résumé par certaines grandeurs nécessaires au suivi du contour et à l'estimation de l'orientation locale. L'ensemble de ces grandeurs constitue »l'état« du contour et est noté E. Elles sont:

H et V: les nombres moyens d'éléments de contour respectivement horizontaux et verticaux, filtrés récursivement au cours du suivi du contour,

NM: le nombre de marches précédentes observées au cours du suivi du contour,

NP: le nombre d'éléments de contour verticaux connexes, mais non connexes à des éléments de contour horizontaux, observés aux lignes précédentes de la ligne en cours de traitement,

NS: somme partielle des signes observés, $\overline{S}$, au cours du suivi du contour; on distinguera sa absolue, INSI, et son signe, S, dit signe du contour,

Q: qui comptabilise les inversions du signe observé ($\overline{S}. S < 0$) en vue d'un test de rupture du suivi du contour.

Dans certains cas, deux (ou plus de deux) contours peuvent se croiser pour former une figure que l'on dénommera »fourche«. Les deux contours formant une fourche possèdent chacun un état (E' et E'₁) dont on peut extraire au point d'intersection un état qui sera dit »interpolé« et noté $\overline{E}$.

L'examen d'une image s'effectue, comme dans le balayage des images de télévision ligne par ligne et point par point.

La figure 1b montre la répartition géométrique du point courant et des points voisins antérieurs et la figure 1c la convention angulaire utilisée pour les orientations ($\Theta$ de $-\pi/2$ à $+\pi/2$, $\Theta > 0$ sur la figure) et leur discrétisation.

3

A la figure 1b, on a représenté la position des divers points qui seront utilisés avec les notations utilisées: $X_n$ pour les valeurs à coder, $\hat{X}_n$ pour les valeurs décodées; l'indice prime dans $\hat{X}'_n$, désigne les points de la ligne précédente et désignera en général, les signaux portant des informations correspondant à la ligne précédente. A la ligne courante, on considère le point courant à l'instant n, ($X_n$) ou à l'instant n + 1, ($X_{n+1}$) dans certains cas, pour que le dernier point décodé soit $\hat{X}_n$.

A la figure 1c, on a représenté la convention angulaire ($\theta$ est pris par rapport à la verticale, positif sur la figure) ainsi que la discrétisation des angles qui, dans l'exemple de réalisation (tableau VI-a), comporte 3eb de module et 1eb de signe. Sur la figure, le contour suivi au point de rang n—J a une orientation estimée $\theta$, de valeur discrétisée +1. La prédiction est préparée à la ligne courante, pour la ligne suivante en calculant une combinaison linéaire, définie par $\theta$, des valeurs de $\hat{X}_{n-J}$ et de $\hat{X}_{n-J+1}$ qui concernera un point défini par $\theta$ à la ligne suivante.

Ces précisions sur la terminologie employée étant données, l'invention prévoit un suivi des contours et une estimation récursive de leur état E qui contient plusieurs paramètres significatifs du contour et dont on extraira une estimation de l'orientation $\theta$. Au point courant à coder, il est prévu d'observer les éléments de contour horizontaux $EH_n$ et verticaux $EV_n$ par un test de l'amplitude de gradients locaux associés, d'en suivre la connexité le long de la ligne courante et par rapport à la ligne précédente. L'observation complète d'une zone connexe permet d'une part, d'engendrer un signal de fin de zone connexe $FZC_n$ et un signal d'absence d'éléments de contours $TROU_n$, et d'autre part de compter le nombre total d'éléments de contour horizontaux et verticaux observés, $\overline{H}$ et $\overline{V}$.

L'invention prévoit dans les zones connexes, d'une part, un traitement des »fourches«, où un état interpolé $\tilde{E}$ est alors calculé à partir des états des deux derniers contours de la fourche à la ligne précédente et, d'autre part, un calcul du signe observé, $\overline{S}$ à la ligne courante. L'état $\tilde{E}$ est alors réactualisé à partir des observations $\overline{H}$, $\overline{V}$, $\overline{S}$. Si la zone connexe observée à la ligne courante n'est pas connexe d'une zone connexe de la ligne précédente, il est prévu une initialisation de l'état; ces deux opérations, initialisation et réactualisation, constituent le calcul du nouvel état, E, du contour.

L'invention prévoit de mémoriser les états E correspondant aux diverses zones connexes observées sur la ligne courante (E') pour qu'ils puissent être utilisés à la ligne suivante. La mémoire d'état est à accès aléatoire. De même, il est prévu la mémorisation pendant une ligne des signaux $EV_n$ et $FZC_n$, ($EV'_n$ et $FZC'_n$).

L'invention prévoit d'utiliser l'état E ainsi que les signaux $EV_n$ et $FZC_n$ pour préparer une prédiction à partir des valeurs de points voisins antérieurs au point à coder. Cette préparation de la prédiction sera mémorisée pendant une ligne pour pouvoir être lue à la ligne suivante. A la ligne courante, il est ainsi prévu de disposer d'une préparation de la prédiction $\overline{P}_{n+1}$, qui contient les renseignements nécessaires au calcul final au point courant, de la prédiction $P_{n+1}$.

De façon plus précise, l'invention a pour objet un dispositif pour le suivi et l'estimation récursive de l'état local de contours d'images définies par des lignes de N points répartis selon une structure d'échantillonnage orthogonale, ces points étant définis par des échantillons numériques successifs, ce dispositif comprenant:

— une mémoire séquentielle possédant une entrée qui reçoit la suite des échantillons numériques et des sorties délivrant des échantillons antérieurs de la même ligne et au moins un échantillon de la ligne précédente,

— un circuit d'examen et d'estimation de la direction du contour d'image qui compare les variations entre deux échantillons et qui calcule une grandeur représentative du contour,

caractérisé en ce que:

A) la mémoire séquentielle est constituée de trois circuits possédant une entrée qui reçoit la suite des échantillons numériques, notés $\hat{X}_n$, où n prend successivement les valeurs entières de 1 à N, et au moins trois sorties délivrant, lorsque l'échantillon de rang n + 1 est reçu à l'entrée, respectivement: l'échantillon de rang n, soit $\hat{X}_n$, l'échantillon de rang n—1, soit $\hat{X}_{n-1}$, appartenant à la même ligne que l'échantillon reçu et l'échantillon de rang n appartenant à la ligne précédente, soit $\hat{X}'_n$,

B) le circuit d'examen comprend:
— des moyens pour détecter entre deux échantillons $\hat{X}_{n-1}$ et $\hat{X}_n$ successifs d'une même ligne, la présence d'une variation de la valeur de l'échantillon qui excède un certain seuil, et pour engendrer un signal correspondant, dit »d'élément de contour vertical« et noté $EV_n$,
— des moyens pour détecter, entre deux échantillons $\hat{X}'_n$ et $\hat{X}_n$ de même rang mais appartenant à deux lignes adjacentes, la présence d'une variation de la valeur de l'échantillon qui excède un certain seuil et pour engendrer un signal correspondant dit »d'élément de contour horizontal« et noté $EH_n$,
— deux éléments de contour étant dits connexes s'ils sont connectés, un contour de l'image étant alors défini par un ensemble d'éléments de contours connexes,
— un moyen pour détecter l'absence d'élément de contour au point de rang n, ce moyen délivrant un signal noté $TROU_n$,

— un moyen pour compter le nombre total d'éléments de contour horizontaux et le nombre total d'éléments de contour verticaux examinés le long d'une ligne pour chaque zone connexe, ces nombres étant traduits en signaux $\overline{H}$ et $\overline{V}$, en fin de zone connexe,

— un moyen pour détecter les éléments de contour horizontaux et verticaux connexes, et pour détecter les ensembles de tels éléments connexes, le long d'une ligne, ces ensembles étant dénommés connexités, chaque connexité étant comprise entre un premier élément de contour et un dernier élément de contour, ce moyen étant apte à délivrer un signal lorsqu'une connexité se termine au point de rang n, signal noté $FZC_n$,

— le circuit d'examen possédant ainsi trois entrées recevant les échantillons $\hat{X}_n$, $\hat{X}_{n-1}$ et $\hat{X}'_n$ et six sorties délivrant respectivement les signaux $EV_n$, $EH_n$, $\overline{V}$, $\overline{H}$, $FZC_n$, $TROU_n$,

C) une boucle fonctionnant de manière récursive, comprenant un moyen pour calculer une grandeur représentative du contour, dénommée état du contour et notée E, cet état étant constitué par un ensemble de nombres qui sont:

— les nombres moyens d'éléments de contour respectivement horizontaux et verticaux, filtrés récursivement au cours du suivi du contour,

— le nombre (NM) de marches précédentes observées au cours du suivi du contour,

— le nombre (NP) d'éléments de contour verticaux connexes, mais non connexes à des éléments de contour horizontaux, observés aux lignes précédentes de la ligne en cours de traitement,

— la somme partielle (NS) des signaux observés ($\overline{S}$) au cours du suivi du contour, sa valeur absolue (INSI) et son signe (S) dit signe du contour,

— le nombre Q qui comptabilise les inversions du signe observé $\theta$,

ledit moyen étant apte à mémoriser l'état E' obtenu pour la ligne précédant celle qui est examinée et pour calculer, en fonction de cet état E' et des signaux $EH_n$, $TROU_n$, $FZC_n$, $\overline{V}$ et $\overline{H}$ obtenu pour la ligne examinée, le nouvel état E du contour à cette ligne examinée.

La présente invention a également pour objet un dispositif de prédiction d'échantillons pour des images définies par des lignes de N points répartis selon une structure d'échantillonnage orthogonale, ces points étant définis par des échantillons numériques, ce dispositif comprenant un dispositif de suivi et d'estimation de la direction du contour d'images et un circuit de calcul d'une prédiction travaillant à partir d'une combinaison linéaire de signaux définissant l'état du contour, caractérisé en ce que:

A) le dispositif pour le suivi et l'estimation récursive de l'orientation des contours de l'image est conforme au dispositif qui a été défini plus haut et dans lequel:

— la mémoire séquentielle est pourvue de deux sorties supplémentaires délivrant les échantillons $\hat{X}_{n-J+1}$ et $\hat{X}_{n-J}$,

— le circuit d'examen possède deux sorties délivrant respectivement:

   i) un signal noté $EV_n$ indiquant la présence d'un élément de contour vertical pour le point de rang n,

   ii) le signal $FZC_n$,

— la boucle récursive possède une sortie délivrant un signal noté EJ déterminant l'état du contour au point de rang n−J,

B) le circuit de calcul de la prédiction comprend un circuit de préparation de cette prédiction et un circuit de calcul final de la prédiction, le circuit de préparation possédant cinq entrées principales, d'eux d'entre elles recevant les échantillons $\hat{X}_{n-J}$ et $\hat{X}_{n-J+1}$ délivrés par la mémoire, les trois autres recevant les signaux EJ, $EV_n$ et $FZC_n$ délivrés par le circuit d'examen et d'estimation récursive de l'état du contour, ce circuit comprenant des moyens pour calculer une combinaison linéaire des signaux $\hat{X}_{n-J}$ et $\hat{X}_{n-J+1}$ qui dépend de l'état EJ et des signaux $EV_n$ et $FZC_n$, et une mémoire à accès direct qui stocke ladite combinaison à une adresse qui dépend du rang n−J et de l'état EJ, cette mémoire ayant une sortie qui délivre un signal $\overline{P}_{n+1}$ pour l'échanntillon d'entrée de rang n+1, le circuit de calcul final de la prédiction possédant deux entrées, l'une recevant l'échantillon $\hat{X}_n$ de la mémoire et l'autre le signal $\overline{P}_{n\pm 1}$ du circuit de préparation de la prédiction, ce circuit comprenant des moyens pour sélectionner $\overline{P}_{n\pm 1}$ ou $\hat{X}_n$ selon les informations contenues dans $\overline{P}_{n+1}$ et pour appliquer la valeur sélectionnée, soit $\overline{P}_{n+1}$, sur une sortie, ce signal constituant l'échantillon de prédiction de rang n+1.

De toute façon, les caractéristiques et avantages de l'invention apparaîtront mieux après la description qui suit d'exemples de réalisation donnés à titre explicatif et nullement limitatif. Cette description se réfère à des dessins sur lesquels:

— les figures 1a, 1b, 1c précisent les notations et la terminologie employées,

— la figure 2 est un bloc-diagramme d'un codeur MICD connu utilisé pour coder avec compression des signaux d'images de télévision,

— la figure 3 est un bloc-diagramme d'une variante du codeur de la figure 2,

— la figure 4 est un bloc-diagramme d'un décodeur MICD classique pour reconstruire des signaux d'images de télévision codés MICD,

- la figure 5 est un bloc-diagramme du circuit de prédiction suivant l'invention,
- la figure 6 est un bloc-diagramme du circuit des observations et de l'estimation récursive e l'état,
- la figure 7 est un bloc-diagramme du circuit d'observation des zones connexes,
- la figure 8 est un bloc-diagramme du circuit d'analyse des zones connexes, d'une ligne à la suivante,
- la figure 9 est un bloc-diagramme du circuit de calcul du barycentre des états,
- la figure 10 est un bloc-diagramme du circuit de réactualisation des états,
- la figure 11 est un bloc-diagramme du circuit de la mémoire de l'état,
- la figure 12 est un bloc-diagramme du circuit de préparation et de mémorisation de la prédiction,
- la figure 13 est un bloc-diagramme du circuit de calcul final de la prédiction.

Bien que l'invention soit plus générale, la description qui suit se réfère au cas où l'estimation du contour sert à une prédiction utilisée pour le codage de signaux de télévision.

La compréhension des blocs-diagrammes qui vont être décrits nécessite les conventions classiques en logique: les valeurs logiques suivent la convention positive et les fronts montants des signaux logiques sont actifs. La synchronisation de l'ensemble des opérations nécessite des circuits de retard et des registres de prise en compte non représentés, sauf s'ils sont explicitement nécessaires à la compréhension de la réalisation. Ainsi, par exemple, l'horloge d'échantillonnage du signal de télévision, HP, devra être correctement retardée là où cela est nécessaire. Le signal de début de ligne sera noté DL, montant à 1 pendant les suppressions de lignes et redescendant à 0 immédiatement après être monté à 1.

Le signal binaire PL portera l'information de parité de la ligne courante (= 1 pour les lignes impaires de la même trame, = 0 pour les lignes paires); il changera d'état logique juste avant DL. Selon la pratique classique, les valeurs des points décodés $\hat{X}$ pendant les suppressionsligne et -trame seront imposés à une valeur fixe, 0 par exemple. Les signaux $TROU_n$, $FZC_n$, $EH_n$, $EV_n$, $E$, $E'$, $EV_{n-J}$, $EV'_n$, $FZC'_n$ devront être annulés pendant les mêmes suppressions; les circuits nécessaires à ces remises à zéro ne sont pas représentés. On conviendra enfin qu'il y a N points par ligne active.

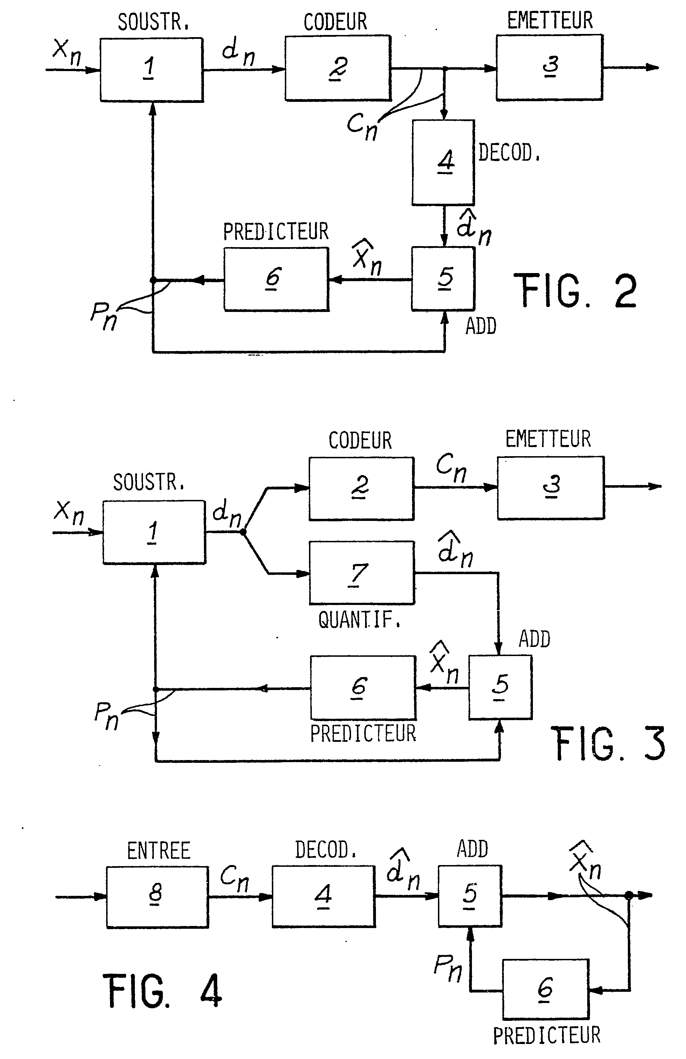

Le codeur MICD de la figure 2 comprend un soustracteur algébrique 1 dont la première entrée est l'entrée de signal à coder, noté $X_n$, et dont la sortie est reliée à l'entrée d'un circuit quantificateur-codeur 2. La sortie de celui-ci est d'une part reliée à un organe d'émission 3, et d'autre part à un circuit quantificateur-décodeur 4 dont la sortie est reliée à la première entrée d'un circuit additionneur algébrique 5. La sortie de celui-ci est reliée à un circuit prédicteur 6 dont la sortie est reliée, d'une part à une seconde entrée du circuit soustracteur 1, et d'autre part, à une seconde entrée du circuit additionneur 5.

Dans l'exemple de réalisation décrit, le signal $X_n$ de télévision à coder est appliqué à l'entrée sous forme numérique, tel que délivré par un codeur classique MIC non montré. Le soustracteur 1 effectue la différence $d_n$ entre le signal numérique $X_n$ et un signal numérique de prédiction $P_n$ délivré par le circuit prédicteur 6. Le circuit quantificateur-codeur peut être constitué par une mémoire morte de codage dans laquelle les valeurs $d_n$ délivrées par le soustracteur 1 sont considérées comme des adresses auxquelles correspondent des signaux MICD, $C_n$ qui sont lus pour être appliqués au circuit 3 qui les transmet. Les signaux numériques sont également appliqués au quantificateur-décodeur 4 qui peut être constitué d'une mémoire morte dans laquelle les valeurs $C_n$ sont considérées comme des adresses auxquelles correspondent des signaux numériques $\hat{d}_n$ qui constituent les différences reconstruites. L'additionneur 5 effectue l'opération de décodage MICD interne classique et délivre un signal $\hat{X}_n$. Ce signal entre alors dans le circuit prédicteur qui contient des mémoires pour stocker certains points voisins antérieurs $\hat{X}_{n-k}$, $k \geqslant 1$ de la même ligne et $\hat{X}_m$ de la ligne précédente. Ce circuit sera décrit plus en détail aux figures suivantes; il délivre la prédiction $P_n$ utilisée pour le soustracteur 1 et pour l'additionneur 5.

Le codeur MICD, de la figure 3 est une variante de la figure 2. Il comprend un circuit soustracteur 1 qui reçoit le signal $X_n$ à coder, sur une première entrée et le signal de prédiction $P_n$, sur une seconde entrée. La sortie du circuit 1 est, d'une part, reliée au circuit quantificateur-codeur 2, identique à celui de la figure 2, et d'autre part à un circuit quantificateur 7 dont la sortie est reliée à la première entrée du circuit additionneur 5. Celui-ci est identique à celui de la figure 2; il reçoit le signal de prédiction $P_n$ sur une seconde entrée et sa sortie est reliée à l'entrée du circuit prédicteur 6, identique à celui de la figure 2. La sortie du circuit 2 est reliée à l'entrée du circuit 3, identique à celui de la figure 2.

Sur la figure 3, le circuit 7 peut être constitué d'une mémoire dont les adresses sont constituées par les signaux numérique $d_n$ et les signaux $\hat{d}_n$ y sont lus: il effectue ainsi directement les opérations effectuées par les circuits 2 et 4 de la boucle de prédiction décrite à la figure 2. Le reste des opérations est identique à celles décrites à la figure 2.

Le décodeur MICD de la figure 4 comprend un circuit d'entrée 8 qui est un organe de réception dont la sortie est reliée à l'entrée d'un circuit quantificateur-décodeur 4 dont la sortie est reliée à la première entrée d'un circuit additionneur 5. La sortie de celui-ci est reliée d'un circuit 6 dont la sortie constitue la seconde entrée du circuit 5; celui-ci délivre le signal reconstitué $\hat{X}_n$ qui est appliqué après une conversion numérique-analogique à un récepteur de télévision, non représenté.

Les opérations effectuées dans le décodeur sont classiques et elles s'appliquent aux deux variantes de réalisation du codeur, décrites aux figures 2 et 3. Les codes reçus $C_n$ sont transformés dans le circuit 4, identique à celui de la figure 2, en différences reconstruites $\hat{d}_n$. Dans le circuit 5, $\hat{d}_n$ est additionné à la prédiction $P_n$ pour délivrer le signal décodé $\hat{X}_n$. Celui-ci entre dans le circuit prédicteur comme aux figu-

6

res 2 ou 3.

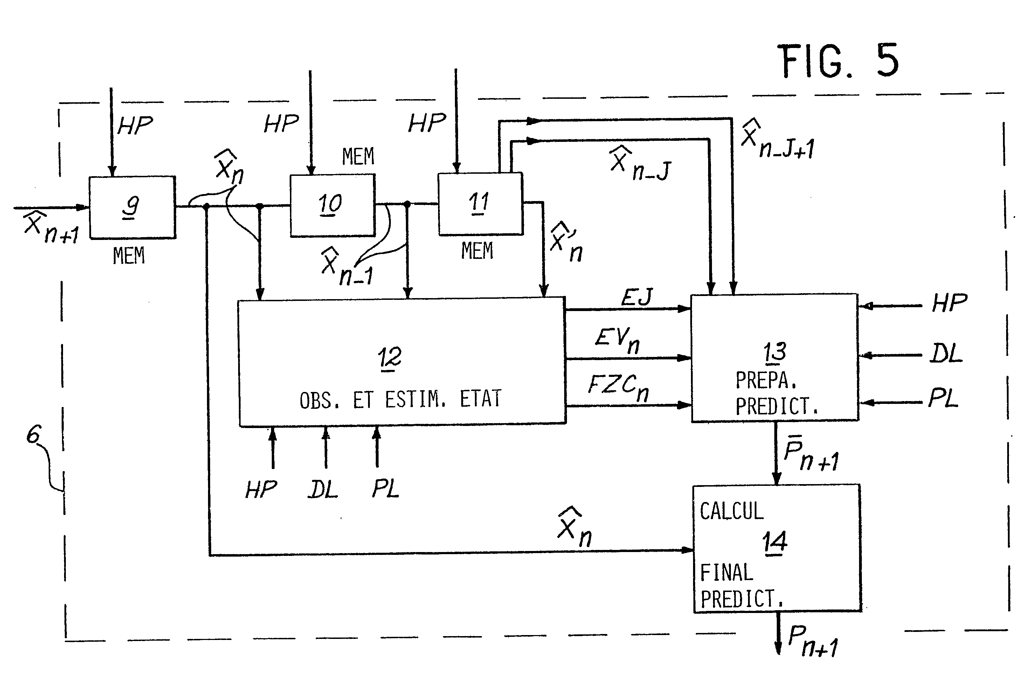

Les circuits des figures 2, 3 et 4 sont connus. L'invention se rapporte plus spécialement au circuit de prédiction 6 qui va maintenant être décrit à l'aide de la figure 5.

Tel que représenté, le circuit prédicteur comprend:

A) une mémoire séquentielle à trois circuits 9, 10 et 11 possédant une entrée qui reçoit la suite des échantillons numériques, et cinq sorties délivrant, lorsque l'échantillon de rang $n + 1$ est reçu à l'entrée, respectivement les échantillons de rang n, soit $\hat{X}_n$, de rang $n - 1$, soit $\hat{X}_{n-1}$, de rang $n - J + 1$, soit $\hat{X}_{n-J+1}$, de rang $n - J$, soit $\hat{X}_{n-J}$, appartenant tous à la même ligne que l'échantillon reçu et l'échantillon de rang n appartenant à la ligne précédente, soit $\hat{X}'_n$,

B) un circuit 12 d'examen et d'estimation récursive de l'état, qui possède trois entrées recevant les signaux $\hat{X}_n$, $\hat{X}_{n-1}$ et $\hat{X}'_n$ et trois sorties délivrant respectivement:

  i) un signal noté EJ déterminant l'état di contour au point de rang $n - J$,
  ii) un signal noté $EV_n$ indiquant la présence d'un élément de contour vertical pour la point de rang n.
  iii) un signal $FZC_n$ de fin de zone connexe,

C) un circuit 13 de préparation d'une prédiction et de mémorisation de cette prédiction préparée; ce circuit possede cinq entrées principales, deux d'entre elles recevant les échantillons $\hat{X}_{n-1}$ et $\hat{X}_{n-J+1}$ délivres par la mémoire, les trois autres recevant les informations EJ, $EV_n$ et $FZC_n$ délivrées par la circuit 12, ce circuit comprend des moyens pour calculer une fonction linéaire des signaux $\hat{X}_{n-J}$ et $\hat{X}_{n-J+1}$ qui dépend de l'état EJ et des signaux $EN_n$ et $FZC_n$, et une mémoire à accès direct qui stocke ladite fonction à une adresse qui dépend du rang $n - J$ et de l'état EJ, cette mémoire ayant une sortie qui délivre un signal $\bar{P}_{n+1}$ pour l'échantillon d'entrée de rang $n + 1$,

D) un circuit 14 de calcul final de la prédiction, ce circuit possédant deux entrées, l'une recevant l'échantillon $\hat{X}_n$ de la mémoire et l'autre le signal $\bar{P}_{n+1}$ du circuit 13 de préparation de la prédiction, ce circuit comprenant des moyens pour sélectionner $\bar{P}_{n+1}$ ou $\hat{X}_n$ selon les informations contenues dans $\bar{P}_{n+1}$ et pour adresser la valeur sélectionnée, soit $P_{n+1}$, sur une sortie, ce signal constituant l'échantillon de prédiction de rang $n + 1$.

Les circuits 9, 10, 11, 12 et 13 sont actionnés par les signaux de service HP (horloge), DL (début de ligne) et PL (parité de ligne).

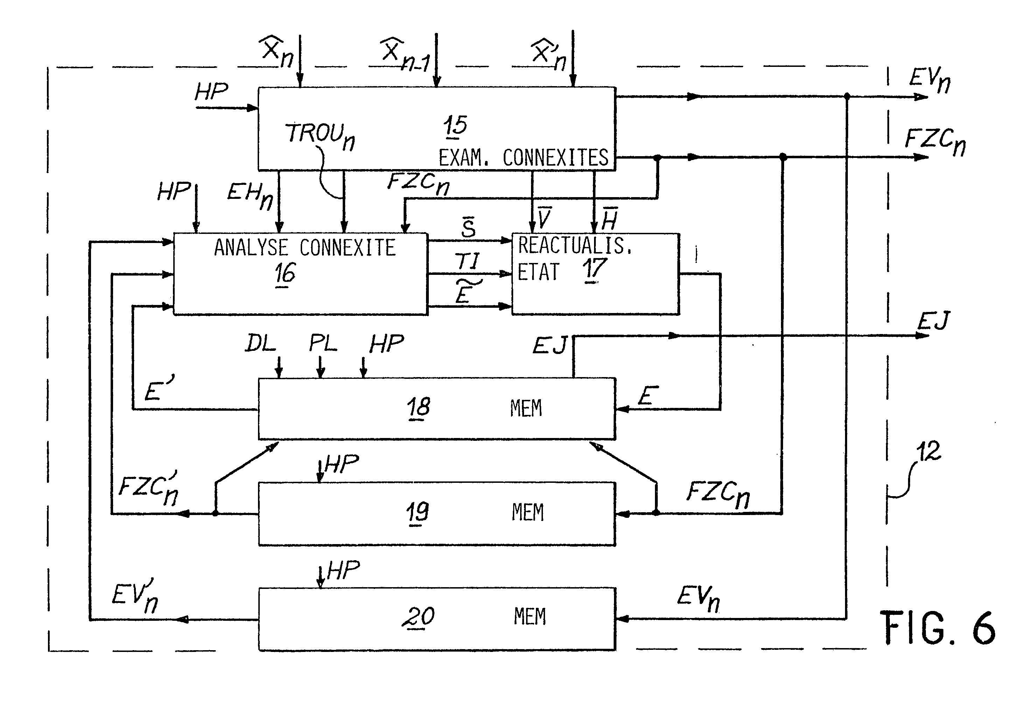

Les circuits 12, 13 et 14 sont décrits sur les figures 6 à 13.

Le bloc-diagramme de la figure 6 tout d'abord, représente le schéma du circuit 12 d'observation et d'estimation récursive de l'état. Ce circuit comprend:

A) un circuit 15 d'examen des connexités comprenant:

  — des moyens pour détecter entre deux échantillons $\hat{X}_{n-1}$ et $\hat{X}_n$ successifs d'une même ligne, la présence ou l'absence d'une variation de la valeur de l'échantillon qui excède un certain seuil, et pour engendrer un signal correspondant d'élément de contour vertical noté $EV_n$,
  — des moyens pour détecter, entre deux échantillons $\hat{X}'_n$ et $\hat{X}_n$ de même rang, mais appartenant à deux lignes adjacentes, la présence ou l'absence d'une variation de la valeur de l'échantillon qui excède un certain seuil et pour engendrer un signal corresponsant d'élément de contour horizontal noté $EH_n$,
  — un moyen pour délivrer un signal $TROU_n$ en cas d'absence de contour au point de rang n,
  — un moyen pour compter le nombre total d'éléments de contour horizontaux et le nombre total d'éléments de contour verticaux examinés le long d'une ligne dans chaque zone connexe, ces nombres étant traduits en signaux $\bar{H}$ et $\bar{V}$,
  — un moyen pour détecter les éléments de contour horizontaux et verticaux connexes sur une ligne, et pour détecter les ensembles de tels éléments connexes, c'est-à-dire les connexités, ce moyen étant apte à délivrer un signal lorsqu'une connexité se termine au point de rang n, signal noté $FZC_n$,
  — le circuit 15 d'examen des connexités possédant ainsi trois entrées recevant les échantillons $\hat{X}_n$, $\hat{X}_{n-1}$ et $\hat{X}'_n$ et six sorties délivrant respectivement les signaux $EV_n$, $EH_n$, $\bar{V}$, $\bar{H}$, $FZC_n$, $TROU_n$,

B) une boucle fonctionnant de manière-récursive, comprenant:

  — une première mémoire 18, dite mémoire d'état, recevant les signaux E et $FZC_n$ relatifs à la ligne en cours d'examen et un signal $FZC'_n$ de fin de connexité pour la ligne précédente; cette mémoire délivre un signal d'état E' relatif à la ligne précédente ainsi que le signal d'état EJ relatif au point de rang $n - J$ de la ligne en cours d'examen;
  — une seconde mémoire 19, à N registres, recevant le signal $FZC_n$ de fin de connexité relatif à la ligne en cours d'examen et délivrant le signal $FZC'_n$ relatif à la ligne précédente;
  — une troisième mémoire 20 recevant le signal $EV_n$ et délivrant un signal $EV'_n$ relatif à la ligne précédente,

**0 021 948**

— un circuit 16 d'analyse des connexités d'une ligne à la suivante, ce circuit possédant six entrées recevant respectivement les signaux $EH_n$, $TROU_n$ et $FZC_n$ du circuit d'observation des connexités, et E', $FZC'_n$ et $EV'_n$ des trois mémoires, ce circuit possédant des moyens pour extraire, des six signaux qu'il reçoit, trois signaux utiles à l'étude d'une connexité et relatifs à la partie de la ligne précédente située au contact de ladite connexité, ces trois signaux étant respectivement:

= un signal $\overline{S}$ donnant le signe de l'orientation di contour de l'image tel qu'observé à la ligne courante,

= un signal TI indiquant la nécessité d'une initialisation de l'état, en début de contour,

= un signal $\tilde{E}$ relatif à un ancien état équivalent pour la connexité en cours d'examen dans le cas d'observation d'une fourche;

— un circuit 17 de réactualisation de l'état, à cinq entrées recevant respectivement les signaux $\overline{H}$ et $\overline{V}$ du circuit 15 d'examen des connexités et $\overline{S}$, TI et $\tilde{E}$ du circuit 16 d'analyse des connexités d'une ligne à la suivante, et à une sortie délivrant un signal d'état E obtenu soit à partir de l'ancien état $\tilde{E}$ et des observations plus récentes $\overline{S}$, $\overline{H}$, $\overline{V}$, soit uniquement à partir des observations les plus récentes $\overline{S}$, $\overline{H}$, $\overline{V}$, cas qui est indiqué par lee signal TI.

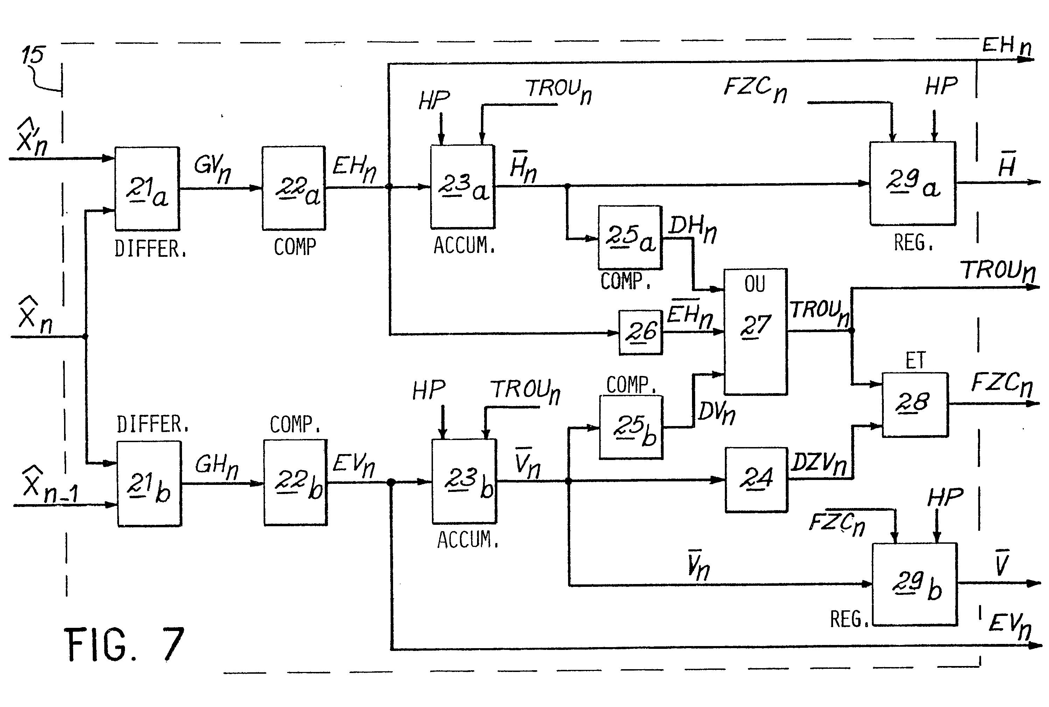

La figure 7 représente le bloc-diagramme du circuit 15 d'observation des zones connexes. Ce circuit comprend:

A) une première voie, de traitement des éléments de contour horizontaux, constituée par:

— un premier circuit différentiateur 21a à deux entrées recevant les signaux $\hat{X}'_n$ et $\hat{X}_n$, et une sortie délivrant un signal $GV_n$ de gradient vertical,

— un premier comparateur 22a recevant le signal $GV_n$ et délivrant le signal logique $EH_n$ représentant un élément de contour horizontal,

— une sortie délivrant ledit signal $EH_n$,

— un premier accumulateur 23a recevant les signaux $EH_n$ et les comptabilisant, pour délivrer un signal $\overline{H}_n$ représentant le nombre d'éléments de contour horizontaux cet accumulateur étant remis à zéro par le signal $TROU_n$,

— un premier comparateur 25a, qui reçoit le signal $\overline{H}_n$ et le compare à un nombre prédéterminé et délivre un signal de dépassement $DH_n$ lorsque $\overline{H}_n$ excède ce nombre,

— un premier registre 29a qui charge le signal $\overline{H}_n$, ce registre étant commandé par le signal $FZC_n$ et délivrant le signal $\overline{H}$ représentant le nombre d'éléments de contour horizontaux de la connexité examinée,

— un inverseur 26 recevant $EH_n$ et délivrant un signal complémentaire $\overline{EH}_n$,

B) une deuxième voie, de traitement des éléments de contour verticaux, constituée par:

— un second circuit différentiateur 21b à deux entrées recevant les signaux $\hat{X}_n$ et $\hat{X}_{n-1}$, et une sortie délivrant un signal $GH_n$ de gradient horizontal,

— un second comparateur 22b recevant le signal $GH_n$ et délivrant le signal logique $EV_n$ représentant un élément de contour vertical,

— une sortie délivrant ledit signal $EV_n$,

— un second accumulateur 23b recevant les signaux $EV_n$ et les comptabilisant, pour délivrer le signal $\overline{V}_n$ et représentant le nombre d'éléments de contour verticaux cet accumulateur étant actionné par le signal d'horloge HP et remis à zéro par le signal $TROU_n$,

— un second comparateur 25b qui reçoit le signal $\overline{V}_n$, le compare à un nombre prédéterminé et délivre un signal de dépassement $DV_n$ lorsque $\overline{V}_n$ dépasse ce nombre,

— un second registre 29b qui charge le signal $\overline{V}_n$, ce registre étant commandé par le signal $FZC_n$, et délivrant le signal $\overline{V}$, représentant le nombre d'éléments de contour verticaux de la connexité examinée,

— un comparateur 24 recevant le signal $\overline{V}_n$ et comparant ce signal à 1, et délivrant un signal $DZV_n$,

C) une porte logique 27 de type OU à trois entrées recevant respectivement les signaux $DH_n$, $\overline{EH}_n$ et $DV_n$ et une sortie délivrant le signal $TROU_n$,

D) une porte logique 28 de type ET à deux entrées recevant les signaux $TROU_n$ et $DZV_n$ et une sortie délivrant le signal $FZC_n$.

Dans l'exemple d'application traité, les signaux $\hat{X}_n$, $\hat{X}'_n$ et $\hat{X}_{n-1}$ proviennent des mémoires 9, 10, 11 de la figure 5. Les circuits 21a et 21b calculent la valeur absolue de la différence entre leurs deux entrées; leurs sortie $GV_n$ et $GH_n$ sont les gradients verticaux et horizontaux codés par huit éléments binaires (eb). Les circuits 22a et 22b sont deux comparateurs dont les sorties logiques respectives sont à 1 si les gradients $GV_n$ et $GH_n$ respectivement sont supérieurs à deux seuils $\lambda_V$ et $\lambda_H$ fixés. Les sorties logiques $EH_n$ et $EV_n$ de ces comparateurs, lorsqu'elles sont à 1, indiquent donc la présence d'éléments de contours horizontaux de verticaux. Ces éléments de contour sont comptabilisés à chaque front montant de HP dans les accumulateurs 23a et 23b et admettent $TROU_n$ comme signal de remise à zéro; leur sorties $\overline{H}_n$ et $\overline{V}_n$ (3eb suffisent) comptabilisent donc le nombre d'éléments horizontaux et verticaux au cours de l'observation de la connexité traitée; ils sont chargés dans les registres 29a et 29b, en fin de connexité

8

(commande FZC$_n$) qui délivrent les nombres $\overline{H}$ et $\overline{V}$ k(3eb) d'éléments de contours horizontaux ou verticaux dans la connexité qui a été examinée. Le circuit 24 est un comparateur ($>$1) dont la sorties est le signal logique DZV$_n$ qui vaut 1 si $\overline{V}_n \geqslant 1$, indiquant le premier élément de contour vertical dans la connexité. Il repasse à zéro en fin de connexité à cause de la remise à zéro par TROU$_n$ de l'accumulateur 23b.

L'obtention des signaux FZC$_n$ et TROU$_n$ s'effectue comme suit. Le signal TROU$_n$ est destiné à repérer les intervalles entre connexités, que lesdites connexités comportent ou non des éléments de contour verticaux; une connexité est interrompue dans les deux cas suivants: soit si l'on n'ob serve puls d'élément de contour horizontal, ce qui implique EH$_n$ = 0 ou $\overline{EH}_n$ = 1 (sortie de l'inverseur 26), soit si l'on observe que le contenu des accumulateurs 23a et 23b dépassent strictement la valeur 6: les circuits 25a et 25b sont des comparateurs ($>$7) dont les sorties logiques DH$_n$ et DV$_n$ passent à 1 si $\overline{H}_n > 7$ et $\overline{V}_n > 7$ respectivement; si l'un de ces trois cas se produit, la connexité est alors rompue, et éventuellement partagée en plusieurs connexités si elle est trop large (DH$_n$ ou DV$_n$ actifs); la raison d'une telle procédue est d'éviter le risque d'avoir des connexités de longueur incontrôlée, ce qui nécessiterait des tamponnages complexes, alors que la solution proposée n'offre que peu d'inconvénients, le cas de débordement ne se produisant que très rarement en pratique. Le circuit 27 est un OU à trois entrées dont la sortie TROU$_n$ indique donc un trou entre connexités et est une sortie du circuit. D'autre part, le signal DZV$_n$ est, avec TROU$_n$, l'une des deux entrées du ET logique 28, qui délivre le signal logique FZC$_n$ indiquant que le trou détecté par TROU$_n$ suit immédiatement une zone connexe admettant au moins un élément de contour vertical: FZC$_n$ est donc un signal rie fin de zone connexe admettant un ou plusieurs éléments de contour verticaux (ce sont exactement les zones connexes pour lesquelles il y aura à effectuer une réactualisation ou une initialisation de l'état); le signal FZC$_n$ apparaît en sortie du circuit.

Bien entendu, chaque utilisation de l'un des deux signaux de commande TROU$_n$ ou FZC$_n$ requiert un réglage convenable des retards de l'horloge point HP; par exemple, dans la figure 7, les signaux FZC$_n$ de commande d'écriture des registres 29a et 29b doivent agir avant les signaux de commande de remise à zéro (TROU$_n$) des accumulateurs 23a et 23b.

Le tableau I décrit, pour une ligne en cours de traitement, l'évolution des divers signaux au cours de l'observation de quatre connexités dont une (la première) n'est pas prise en compte car ne présentant pas d'éléments de contour verticaux et une autre (la troisième) est trop longue et est donc segmentée. Les signaux $\overline{H}$ et $\overline{V}$ ne sont indiqués qu'en fin de connexité.

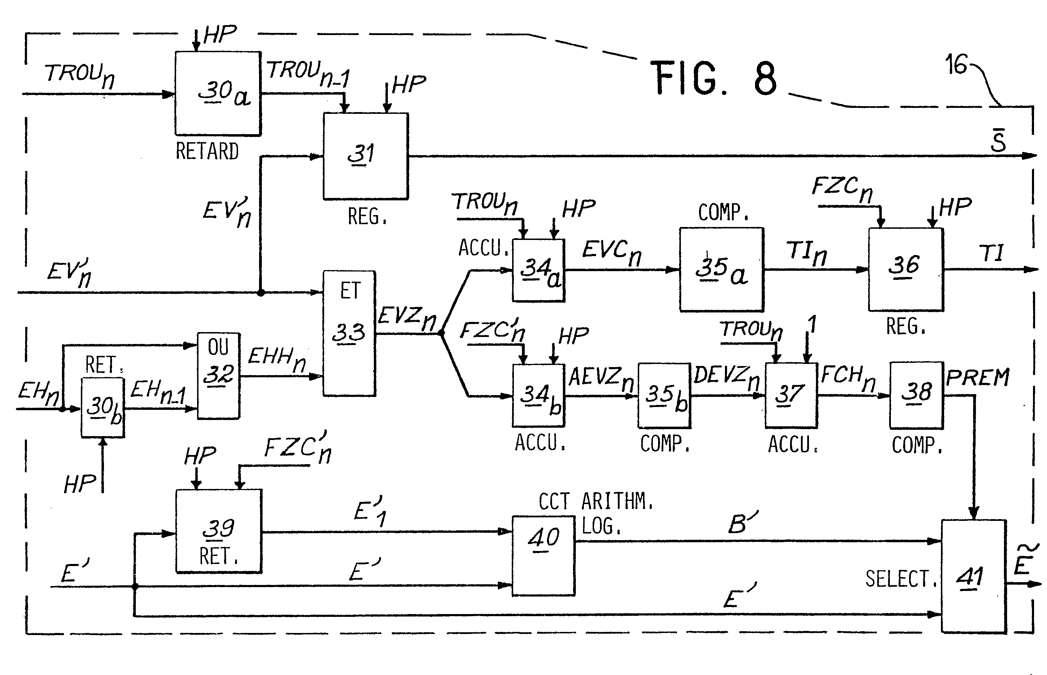

Le circuit 16 d'analyse des zones connexes d'une ligne à la suivante est détaillé à la figure 8. Il comprend:

— un premier circuit retard 30a, à une entrée recevant le signal TROU$_n$ et à une sortie délivrant un signal retardé TROU$_{n-1}$,
— un registre 31 à une entrée de signal recevant le signal EV$'_n$ et à une entrée de commande recevant le signal TROU$_{n-1}$ et à une sortie délivrant le signal $\overline{S}$,
— un second circuit retard 30b actionné par le signal d'horloge HP, à une entrée recevant le signal EH$_n$ et à une sortie délivrant un signal EH$_{n-1}$,
— une porte logique 32, de type OU, à deux entrées recevant les signaux EH$_{n-1}$ et EH$_n$ et à une sortie délivrant un signal EHH$_n$,
— une porte logique 33 de type ET, à deux entrées recevant les signaux EHH$_n$ et EV$'_n$ et à une sortie délivrant un signal EVZ$_n$,
— une première voie de traitement du signal EVZ$_n$ comprenant:
  i)   un premier accumulateur 34a ayant une entrée de rimise à zéro recevant le signal TROU$_n$, une entrée de signal recevant EVZ$_n$ et une sortie délivrant un signal EVC$_n$,
  ii).  un premier comparateur 35a par rapport à 1, à une entrée recevant EVC$_n$ et à une sortie délivrant un signal TI$_n$,
  iii)  un registre 36 possédant une entrée d'écriture recevant le signal FZC$_n$, une entrée de signal recevant TI$_n$ et une sortie délivrant un signal TI de nécessité d'une initialisation,
— une seconde voie de traitement du signal EVZ$_n$ comprenant:
  i)   un second accumulateur 34b ayant une entrée de remise à zéro recevant le signal FCC', une entrée de signal recevant EVZ$_n$ et une sortie délivrant un signal AEVZ$_n$,
  ii)   un second comparateur 35b par rapport à 1, à une entrée recevant AEVZ$_n$ et à une sortie délivrant un signal DEVZ$_n$,
  iii)  un accumulateur 37 possédant une entrée de remise à zéro recevant le signal TROU$_n$, une entrée d'autorisation recevant le signal DEVZ$_n$, une entrée de signal recevant un signal 1 et une sortie délivrant un signal FCH$_n$,
  iiii) un comparateur 38 par rapport à 1, à une entrée recevant le signal FCH$_n$ et à une sortie délivrant un signal de commande PREM,
— un circuit retard 39, à une entrée e emise à zéro recevant FZC$'_n$, à une entrée de signal recevant le signal d'état E' et à une sortie délivrant un signal d'état E$'_1$,
— un circuit arithmétique et logique 40 à deux entrées, recevant l'une E$'_1$ et l'autre E', et à une sortie délivrant un signal B' de pondération des signaux E$'_1$ et E',

9

— enfin, un circuit sélecteur 41 à une entrée de commande recevant le signal PREM, à deux entrées recevant les signaux B' et E', et à une sortie délivrant le signal Ě d'état équivalent en présence de fourche.

La fonction du circuit 16 d'analyse des zones connexes d'une ligne à la suivante est d'extraire celles des informations utiles à l'étude d'une connexité, qui sont relatives à la partie de la ligne précédente située au contact de ladite connexité; ces informations sont au nombre de trois, correspondant aux trois sorties du circuits: $\overline{S}$, TI, Ě.

Le signal $\overline{S}$ donne l'information concernant l'orientation du contour (cf. figure 1c): $\overline{S} = 1$ si $\theta > 0$, $S = 0$ si $\theta < 0$; ce signal, disponible sous l'action de $TROU_{n-1}$, délivré à partir du signal $TROU_n$ par le retard 30a, est fourni en chaque point suivant immédiatement un point non situé dans une connexité, mais n'a la signification requise que lors du début d'une connexité (cf. tableau IIa), seul moment où il sere effectivement utilisé par la suite (indiqué par * dans le tableau IIa).

Le signal TI indique la nécessite d'une initialisation; pour la connexité en cours (remise à zéro par $TROU_n$), l'accumulateur 34a compte les éléments de contour verticaux $EV'_n$ situés immédiatement au-essus de la connexité traitée, extrémités comprises (d'où la présence de $EH_{n-1}$), tandis que le signal TI (inscription de $TI_n$ en fin de connexité) indique par sa valeur 1 que ledit accumulateur est vide.

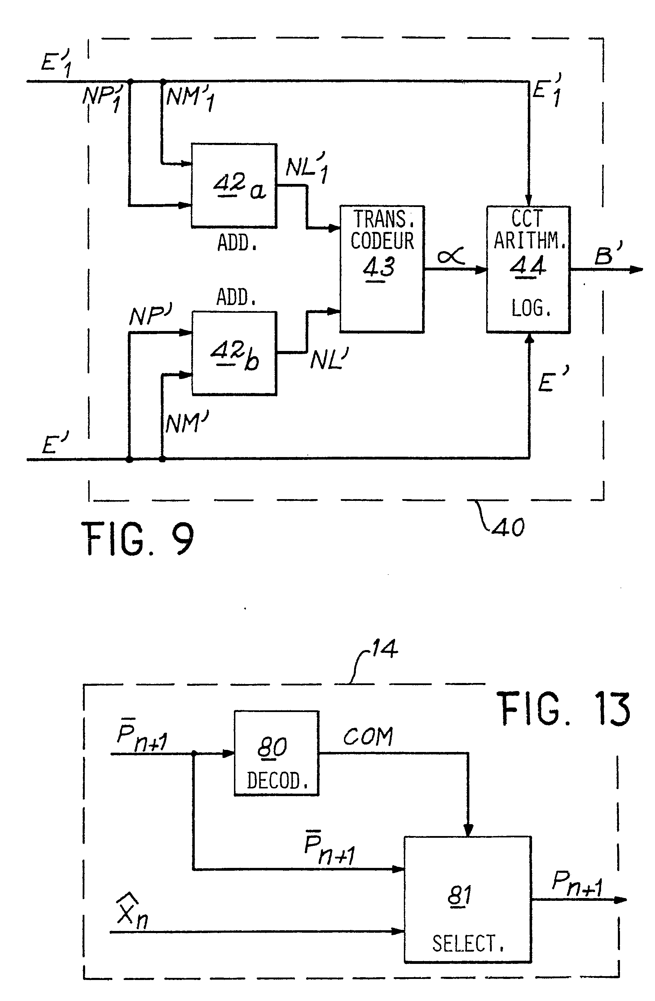

Le signal Ě constitue l'état équivalent en présence de fourche, c'est-à-dire d'une situation où deux connexités différentes de la ligne précédente seraient reliées toutes deux à la même connexité au cours de son traitement (cf. tableau IIb), auquel cas le circuit 40 effectue un calcul »barycentrique«, dont le résultat est B', à partir des états des deux dernières connexités E' et $E'_1$ de la ligne précédente, reliées à la connexité en cours de traitement (ce circuit sera précisé à la figure 9); en cas de présence d'une fourche à trois branches ou plus, seules les deux dernières sont retenues pour cette opération. La présence d'une fourche est détectés par le signal de commande PREM du sélecteur 41 (Ě = E' si PREM = 1, Ě = B' si PREM = 0) qui est engendré de la manière suivante: le signal $AEVZ_n$ compte les éléments de contour verticaux relatifs à une connexité de la ligne précédente (d'où la remise à zéro par $FZC'_n$) et reliés à la connexité en cours de traitement; la sortie du comparateur 35b ($\geqslant 1$) contient l'information nécessaire à la détection des premiers instants où $AEVZ_n$ n'est plus nul: l'état du signal $DEVZ_n$ donne à l'horloge HP l'autorisation d'accumuler l'entrée de valeur 1 dans l'accumulateur 37, dont la sortie $FCH_n$ comptabilise (tableau IIb) le nombre de branches de la fourche, enfin, le comparateur 38 impose PREM = 1 si $FCH_n \leqslant 1$.

Le circuit »barycentre« 40, introduit à la figure 8 est détaillé à la figure 9. Il comprend deux circuits additionneurs 42a et 42b dont les entrées respectives véhiculent des signaux $NP'_1$ et $NM'_1$ regroupant certains éléments binaires du signal d'état $E'_1$ d'une part, et des signaux NP' et NM' extraits du signal d'état E' d'autre part. Les sorties des deux circuits 42a et 42b sont les entrées d'un circuit transcodeur 43 dont la sortie est une entrée du circuit arithmétique et logique 44 dont la sortie véhicule le signal B', et dont les autres entrées véhiculent les signaux E' et $E'_1$.

Les additionneurs 42a et 42b fournissent les longueurs approchées $NL' = NM' + NP'$ et $NL'_1 = NM'_1 + NP'_1$ des deux contours constituant la fourche. La sortie $a$ du circuit 43 est un coefficient pondérateur servant à tenir compte de la longueur relative des deux contours.

Les tableaux IIIa et IIIb donnent deux variantes de correspondance entre $NL'_1$, NL' et $a$. Le tableau IIIa constitue la première variante et le tableau IIIb complémente le tableau IIIa dans le cas de la seconde variante en explicitant le cas $NL' > 1$, $NL'_1 > 1$ du tableau IIIa.

Le tableau IV indique la nomenclature des composantes des différents vecteurs d'état utilisés (E, EJ, E', $E'_1$, B', Ě, EE, EI) avec leur numérisation.

Le tableau V ci-joint donne la correspondance entre les états E' et $E'_1$ et l'état équivalent par »barycentrage«, B'.

Dans ce tableau, les signes S' et $S'_1$ sont à interprêter sous la forme $\pm 1$ (−1 si l'élément binaire est à 0, +1 si l'élément binaire est à 1) cette convention est valable pour toutes les formules intervenant dans les divers tableaux.

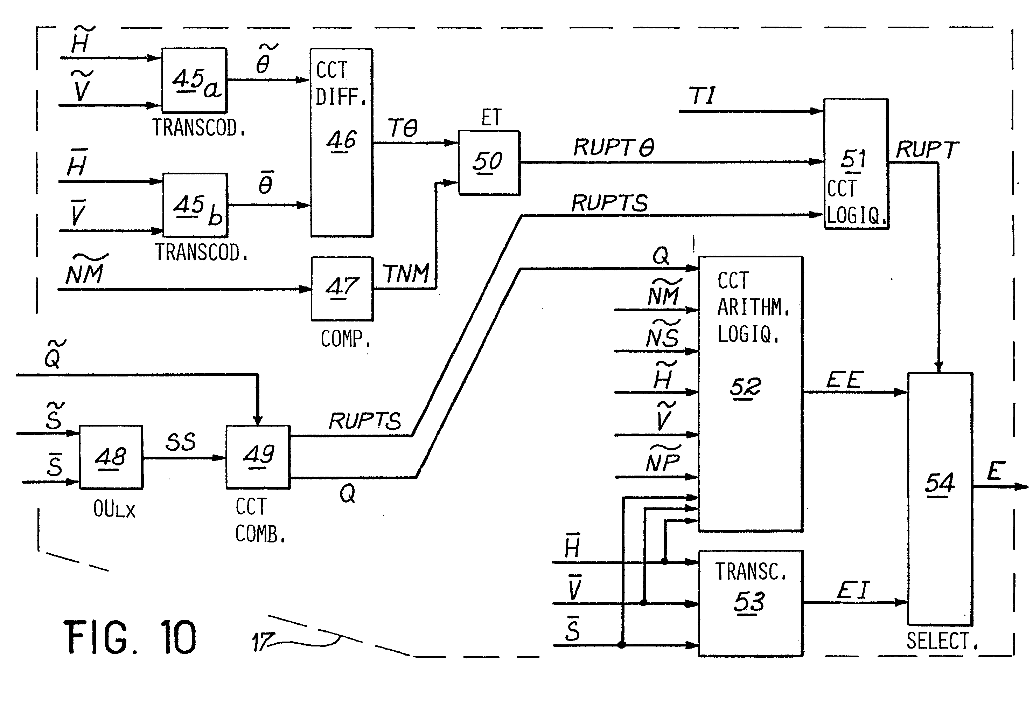

La figure 10 détaille le circuit »réactualisation de l'état local« 17 introduit à la figure 6. Ce circuit comprend:

— un premier transcodeur 45a à deux entrées recevant des signaux d'éléments de contour horizontaux et verticaux $\tilde{H}$ et $\tilde{V}$ extraits du signal d'état Ě, et à une sortie délivrant on signal $\tilde{\theta}$ correspondant à la valeur absolue d'un angle ancien d'orientation du contour,

— un second transcodeur 45b à deux entrées recevant des signaux d'éléments de contour horizontaux et verticaux $\overline{H}$ et $\overline{V}$ issus du circuit 15 et à une sortie délivrant un signal $\overline{\theta}$ correspondant à la valeur absolue d'un angle d'orientation du contour examiné,

— un circuit différentiateur à seuil 46 à deux entrées recevant les signaux $\tilde{\theta}$ et $\overline{\theta}$ et à une sortie délivrant un signal $T\theta$,

— un circuit comparateur 47 par rapport à 2, à une entrée recevant un signal $N\tilde{M}$ extrait du signal d'état Ě et représentant le nombre de marches du contour, et à une sortie délivrant un signal TNM,

— une porte logique 50 de type ET et à deux entrées recevant respectivement les signaux $T\theta$ et TNM et à une sortie délivrant un signal $RUPT\theta$,

- un circuit logique 48, de type OU-exclusif, à deux entrées recevant respectivement le signal Š extrait du signal d'état Ě, et le signal S̃ issu du circuit d'analyse ligne par ligne, et à une sortie délivrant un signal SS,
- un circuit combinatoire 49 à deux entrées recevant respectivment un signal Q̃ extrait du signal Ě et le signal SS, et à deux sorties, l'une délivrant un signal RUPTS et l'autre un signal Q,
- un circuit logique 51, de type OU, à trois entrées recevant respectivement le signal TI, le signal RUPTθ et le Signal RUPTS et à une sortie délivrant un signal RUPT,
- un circuit arithmétique et logique 52 de réactualisation de l'état, à neuf entrées recevant respectivement le signal Q et les signaux provenant de Ě soit: NM̃, NS̃, H̃, Ṽ, NP̃, ainsi que les signaux d'observation H̄, V̄ et S̄, et à une sortie délivrant un signal EE de réactualisation,
- un transcodeur 53 à trois entrées recevant respectivement les signaux H̄, V̄ et S̄ et à une sortie délivrant un signal EI d'état initialisé,
- un sélecteur 54 à deux entrées, recevant les signaux EE et EI, à une entrée de commande recevant le signal RUPT, et à une sortie délivrant le signal E.

Les circuits 45a et 45b peuvent être deux mémoires programmables identiques qui à partir de H̃ et Ṽ, respectivement H̄ et V̄, délivrant θ̃, respectivement θ̄. Ces deux angles mesurent en valeur absolue l'angle ancien et l'angle observé, exprimés avec 3eb dans l'exemple des tableaux VIa et VIb qui sont deux variantes de la transformation donnant θ à partir de H et V.

Le circuit 46 effectue le test $|\tilde{\theta}-\bar{\theta}| \geqslant \Delta\theta$, où $\Delta\theta$ est un seuil fixé. Le circuit 47 est un comparateur ($\geqslant 2$) dont la sortie est TNM (TNM = 1 sie NM̃ $\geqslant$ 2). La sortie du ET logique 50 est le signal RUPTθ qui ne prend en compte la rupture sur la valeur absolue de θ que si la longueur du contour observé est suffisante. Le signal SS, sortie du OU exclusif 48 est traité avec le signal Q par le circuit combinatoire 49 à deux entrées et deux sorties, dont le tableau de correspondance est écrit au tableau VII.

La sortie RUPTS indique une rupture sur changement de signe persistant au moins deux lignes successives.

Les signaux RUPTS, RUPTθ et TI sont combinés par le OU logique 51. Le signal RUPT (rupture) résultant est celui qui effectue le choix E = EI (état initialisé) dans le sélecteur 54 quant RUPT = 1. Le circuit arithmétique et logique 52 a pour entrées le contenu de Ě, Q̃ ayant néanmoins été remplacé par Q, et les trois observations H̄, V̄, S̄: il effectue la réactualisation de l'état suivant les formules indiquées aux tableaux VIII et IX, et délivre en sortie le signal EE (état réestimé). Enfin, le signal EI est la sortie du circuit transcodeur 53 effectuant, suivant les indications du tableau IX, le chargement de EI à partir des observations H̄, V̄, S̄. Dans le tableau IX, le signe S est à interpréter sous la forme ±1 et non pas 0 ou 1.

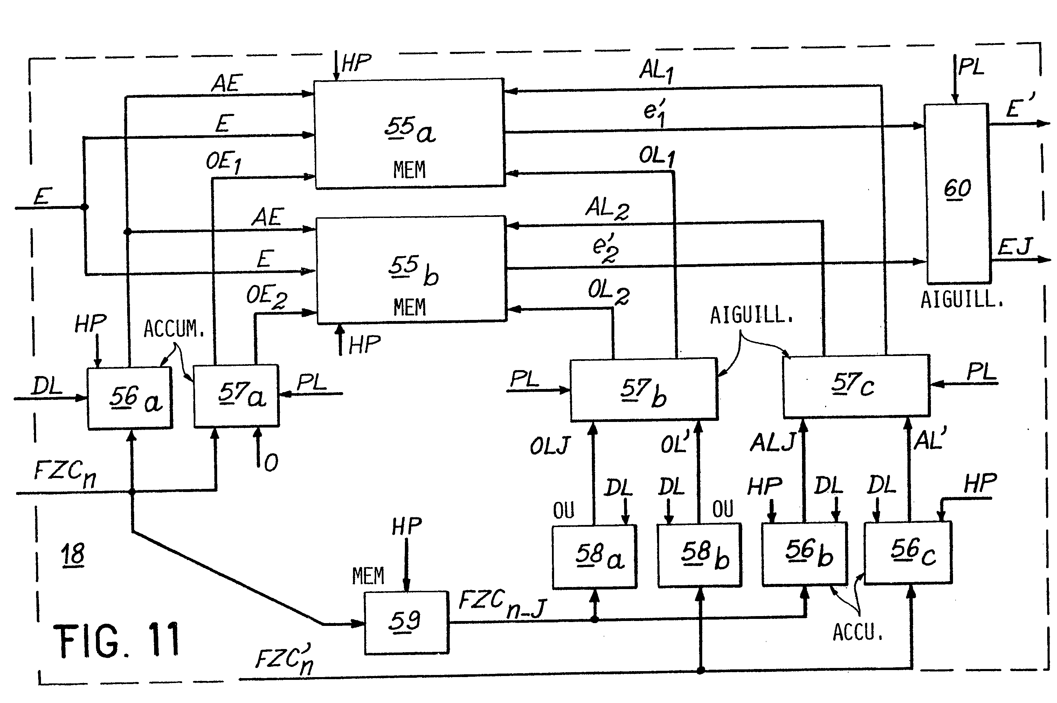

Le bloc-diagramme de la figure 11 représente le schéma de la mémoire d'état 18 mentionnée à la figure 6. L'entrée notée $FZC_n$ est reliée d'une part aux entrées des circuits accumulateurs 56a et 57a, et, d'autre part, à l'entrée du circuit mémoire 59 actionné par HP; le circuit 56a, actionné par HP et remis à zéro par le signal DL de début de ligne, a sa sortie reliée à la première entrée des deux circuits mémoire 55a et 55b actionnés par HP. Outre l'entrée notée $FZC_n$, le circuit 57a admet le signal PL de parité de ligne, et ses sorties sont reliées respectivement à la troisième entrée du circuit 55a et à la troisième entrée du circuit 55b. La sortie du circuit 59 est reliée à la première entrée des deux circuits logique OU 58a et accumulateur 56b dont l'autre entrée est le signal DL; leurs sorties sont respectivement reliées à la première entrée des circuits aiguilleurs 57b et 57c. Le signal d'entrée noté $FZC'_n$ est relié à l'entrée des circuits OU logique 58b et accumulateur 56c actionnés par HP et remis à zéro par DL. Les sorties de ces deux circuits sont respectivement reliées aux secondes entrées respectives des circuits 57b et 57c; les sorties du circuit 57b sont reliées aux quatrièmes entrées des circuits 55a et 55b. Les sorties du circuit 57c sont reliées aux cinquièmes entrées des circuits 55a et 55b. L'entrée notée E est reliée aux secondes entrées des circuits 55a et 55b. Ces deux circuits ont leurs sorties reliées aux entrées du circuit aiguilleur 60 commandé par PL, dont les sorties véhiculent les signaux E' et EJ.

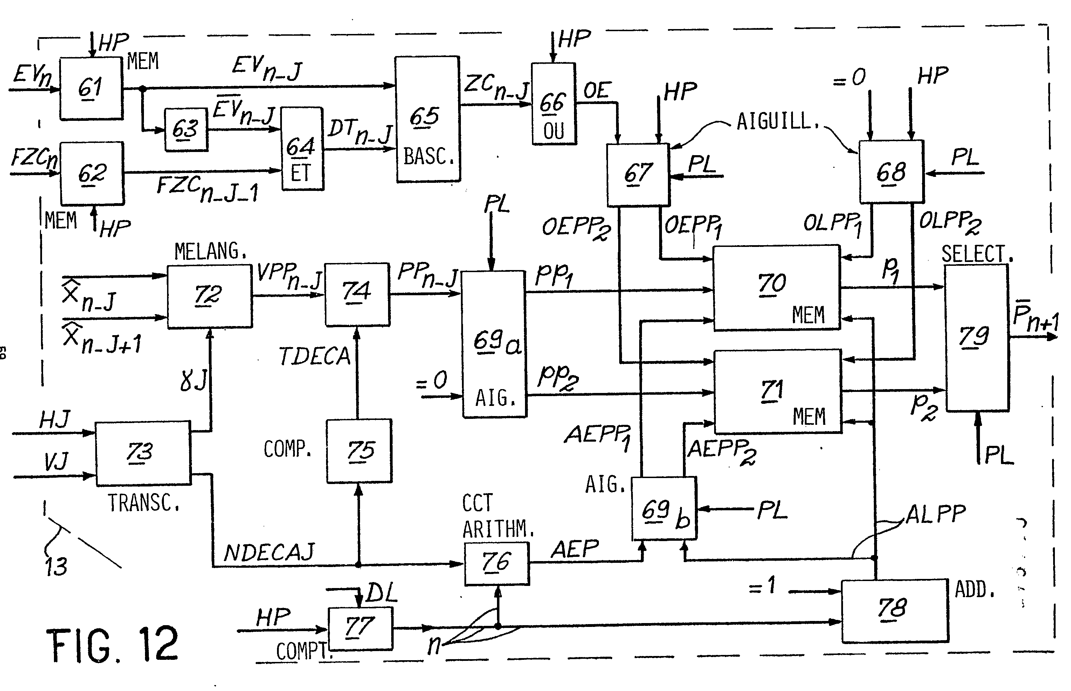

La mémoire d'état est constituée de deux mémoires à accès dorect (RAM) 55a et 55b relatives à la ligne courante et à la ligne précédente, la commutation à chaque changement de ligne s'effectuant aux aiguillages 57a, b, c et 60 sous l'effect de la commande PL (0 ou 1) indiquant la parité de la ligne, suivant les indications du tableau X. Le signal AE est une adresse d'écriture sortant de l'accumulateur 56a (remis à zéro par le signal de commande DL de début de ligne) incrémenté par le signal de commande $FZC_n$ indiquant la fin d'une zone connexe. De même, les ordres d'écriture $OE_1$ et $OE_2$ sont obtenus en sortie de l'aiguillage 57a, commandé par PL, dont les deux entrées sont $FZC_n$ et 0: on écrit seulement dans celle des deux mémoires relatives à la ligne courante (tableau X). Les états sont lus d'une part pour la ligne précédente (état E') et, d'autre part, pour la ligne courante (état EJ) pour une connexité qui se trouverait à la ligne courante éventuellement au point n-J (n étant le point courant, J étant un entier fixé qui sera précisé à la fin de la description de la figure 12). Les commandes de lecture pour la ligne précédente vont donc être obtenues en sortie OL' du circuit OU logique 58b, dont la seconde entrée est DL (signal de commande indiquant un début de ligne): une première lecture est à effectuer en début de ligne, puis le signal FZC' indique que la connexité relative à l'état E' qui vient d'être lu est terminée et qu'il faut par conséquent donner un nouvel ordre de lecture. L'ordre de lecture de la mémoire d'état relative à n a été complètement calculé lorsque le point n-J arrive (les connexités sont de largeur ≤ J, cf. figure 7, et tableau I), s'obtient en sortie OLJ du circuit OU logique 58a à deux entrées admettant $FZC_{n-J}$ (sortie

du circuit 59 retardant $FZC_n$ de J points) et DL comme entrées; OLJ agit exactement comme OL'. Les ordres de lecture sont aiguillés en 57b sous l'effet de la commande PL de parité de ligne (cf. tableau X). Les adresses e lectures AL' et ALJ, relatives respectivement à la ligne précédente (lecture de E') et à la ligne courante avec retard de J (lecture de EJ) s'obtiennent, suivant le même principe que précédemment, en sortie des accumulateurs 56b et 56c dont les entrées respectives reçoivent $FZC'_n$ et $FZC_{n-J}$, et dont la commande de remise à zéro est DL. L'aiguillage de ces adresses s'effectue en 57c sous l'effet du signal PL (tableau X). En retour, le même signal PL commande l'aiguilleur 60 (tableau X) qui, ayant pour entrées les sorties $e'_1$ et $e'_2$ des deux mémoires RAM 55a et 55b délivre à sa première sortie E', et à sa seconde sortie EJ (tableau X). Le tableau X ci-joint indique les affectations effectuées par les aiguillages 57a,b,c et 60.

Le circuit 13 e préparation et de mémorisation de la prédiction est illustré sur la figure 12. Il comprend:

— une première mémoire 61 à une entrée recevant le signal $EV_n$ et à une sortie délivrant un signal retardé $EV_{n-J}$,
— un circuit inverseur 63 à une entrée recevant $EV_{n-J}$ et délivrant un signal complémentaire $\overline{EV}_{n-J}$,
— une seconde mémoire 62 à une entrée recevant le signal $FZC_n$ et à une sortie délivrant un signal retardé $FZC_{n-J-1}$,
— une porte logique 64 de type ET à deux entrées recevant respectivement les signaux $\overline{EV}_{n-J}$ et $FZC_{n-J-1}$ et à une sortie délivrant $DT_{n-J}$,
— une bascule 65 à deux entrées recevant respectivement les signaux $EV_{n-J}$ et $DT_{n-J}$ et à une sortie délivrant un signal $ZC_{n-J}$,
— une porte logique 66 de type OU à deux entrées, l'une recevant le signal d'horloge HP et l'autre le signal $ZC_{n-J}$ et à une sortie délivrant un signal OE,
— un circuit aiguilleur 67 à deux entrées recevant l'une le signal d'horloge HP, l'autre le signal OE, à une entrée de commande recevant le signal PL, et à deux sorties délivrant respectivement un signal $OEPP_1$ et un signal $OEPP_2$,
— un circuit aiguilleur 68 à deux entrées recevant respectivement le signal d'horloge et un signal 0 de valeur nulle, à une entrée de commande recevant le signal de service PL et à deux sorties délivrant respectivement des signaux $OLPP_1$ et $OLPP_2$,
— un circuit transcodeur 73 à deux entrées recevant respectivement les signaux HJ et VJ extraits du signal d'état EJ et à deux sorties, délivrant respectivement un signal $y$ J et un signal NDECAJ,
— un comparator 75 par rapport à un nombre au plus égal à J, à une entrée recevant le signal NDECAJ et à une sortie délivrant le signal TDECA,
— un compteur 77 à une entrée de remise à zéro recevant le signal de service DL et une entrée recevant le signal de service DL et une entrée recevant le signal d'horloge HP et à une sortie délevrant un signal n,
— un circuit arithmétique 76 à deux entrées recevant respectivement les signaux NDECAJ et n, et à une sortie délivrant le signal AEP correspondant à $n - J + NDECAJ$,
— un additionneur 78 à deux entrées, l'une recevant le nombre n et l'autre le nombre 1 et à une sortie délivrant le signal ALPP correspondant à $n + 1$,
— un premier aiguilleur 69a à deux entrées recevant respectivement le signal $PP_{n-J}$ et un signal 0 nul, et à une entrée de commande recevant le signal de service PL et à deux sorties délivrant respectivement des signaux $pp_1$ et $pp_2$,
— un second aiguilleur 69b à deux entrées recevant respectivement les signaux ALPP et AEP, à une entrée de commande recevant le signal de service PL, et à deux sorties délivrant respectivement des signaux $AEPP_1$ et $AEPP_2$,
— une première mémoire 70 à accès direct, à cinq entrées recevant respectivement les signaux $OEPP_1$, $OLPP_1$, $AEPP_1$, ALPP et $pp_1$ et à une sortie délivrant un signal $P_1$,
— une seconde mémoire RAM 71 à accès direct, à cinq entrées recevant respectivement les signaux $OEPP_2$, $OLPP_2$, $AEPP_2$, ALPP et $pp_2$, et à une sortie délivrant un signal $p_2$,
— un sélecteur 79 à deux entrées recevant respectivement les lignaux $p_1$ et $p_2$ et une sortie délivrant un signal de prédiction préparé $\overline{P}_{n+1}$.

Le signal $EV_n$ est mémorisé dans le circuit 61 actionné par HP, pendant J périodes de HP; le signal $FZC_n$ est mémorisé dans le circuit 62 actionné par HP pendant $J + 1$ périodes de HP. Le signal $EV_{n-J}$ met à 1 la bascule 65 sur ses fronts montants, il est d'autre part inversé par le circuit 63. Le signal $DT_{n-J}$ est le résultat d'un ET logique des signaux $FZC_{n-J-1}$ et $\overline{EV}_{n-J}$; par le circuit 64, il met à 0 la bascule 65 sur ses fronts montants. La sortie de la bascule $ZC_{n-J}$, indique quand elle vaut 1 que le point $n - J$ est dans une zone connexe, entre le premier élément de contour vertical et la fin de la zone, bornes incluses. Les circuits 67, 68, 69a, 69b et 79 permettent de commander les écritures et les lectures, d'indiquer les adresses d'écriture et de lecture, d'entrer les valeurs à écrire et de délectionner les sorties des circuits mémoire RAM 70 et 71, qui mémorisent sur une ligne la valeur $PP_{n-J}$ ou la valeur 0 sur une ligne.

Le fonctionnement des circuits 70 et 71 est inversé à chaque ligne, les divers signaux nécessaires à ce fonctionnement sont commutés selon le tableau XI.

L'ordre d'écriture OE est obtenu par un ET logique des signaux $ZC_{n-J}$ et HP ; il commande l'écriture de $PP_{n-J}$ à l'adresse AEP.

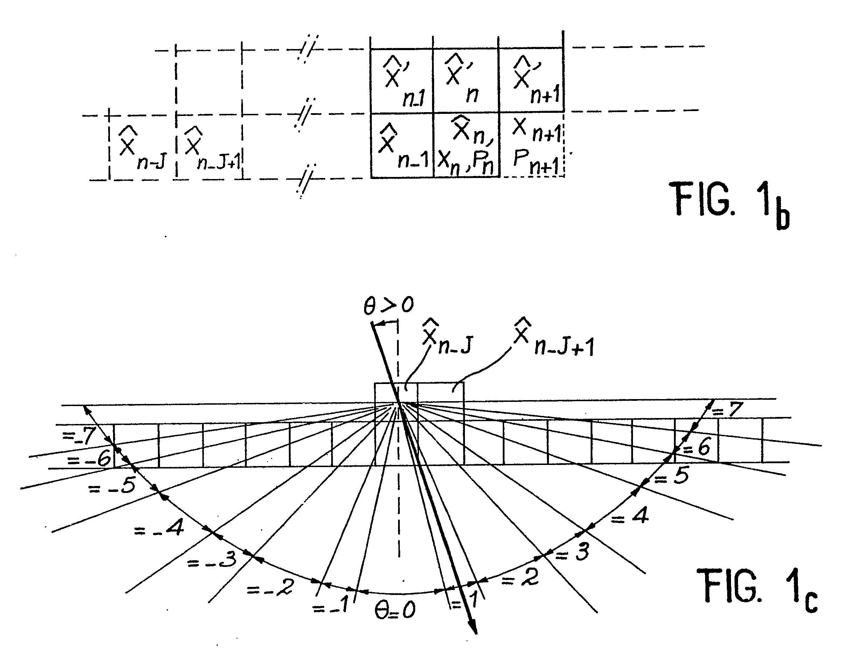

Supposons PL = 1, c'est alors la mémoire 70 qui fonctionne selon ce mode ($OEPP_1$ = OE, $pp_1$ = $pp_{n-J}$), l'adresse d'écriture est $AEPP_1$ = AEP qui, grâce au circuit arithmétique 76, vaut n − J + NDECAJ, n étant l'indice du point compté dans le circuit 77 qui est remis à zéro en début de ligne, J étant un nombre entier fixe que l'on précisera plus loin et NDECAJ étant un décalage entier directement fonction de l'angle estimé du contour observé au point n − J (voir figure 1 c). NDECAJ, de même que $y$ J, est obtenu par transcodage des signaux HJ, VJ et SJ, issus de l'état EJ, grâce au circuit contenant une mémoire programmable 73 et selon les indications fournies au tableau XII, dans l'exemple considéré. L'angle $\varphi$J indiqué est obtenu à patir de HJ et VJ de la même façon qu'aux tableau VIa et VIb qui sont deux variantes ; son signe est SJ ; il n'est pas nécessaire d'engendrer $\varphi$J dans le circuit 73.

Dans l'exemple où PL = 1, la mémoire 72 fonctionne selon un mode de lecture-écriture, de telle sorte qu'à chaque coup d'horloge HP ($OLPP_2$ = HP, circuit 68), la mémoire 71 est lue à l'adresse ALPP (= n + 1, grâce à l'additionneur 78), le sélecteur 79 délivre le résultat de cette lecture ($\overline{P}_{n+1}$ = $pp_2$) ; immédiatement après que la lecture est effectuée, le contenu de la mémoire 71 est remis à zéro, en y inscrivant la valeur 0 ($pp_2$ = 0, circuit 69a), à la même adresse ($AEPP_2$ = ALPP, circuit 69b). L'horloge d'écriture $OEPP_2$ nécessaire pour cette opération est alors HP, entrée du circuit 67, qui sera retardée suffisamment pour intervenir après la fin du cycle de lecture qui délivre $\overline{P}_{n+1}$. Il faut donc que les mémoires RAM 70 et 71 soient conçues pour autoriser un cycle de lecture puis d'écriture pendant la durée d'une période de l'horloge HP. Quand PL = 0, les deux mémoires 70 et 71 ont le fonctionnement inverse. Enfin, le circuit mélangeur 72 délivre à partir de ses entrées $\hat{X}_{n-J}$ et $\hat{X}_{n-J+1}$, le signal $VPP_{n-J}$ qui est égal $(1 - \varphi J) \cdot \hat{X}_{n-J} + y J \cdot \hat{X}_{n-J+1}$, dans l'exemple de réalisation décrit, $y$J prenant les valeurs numériques $0, \frac{1}{4}, \frac{1}{2},$ ou $\frac{3}{4}$ selon les indications du tableau XII (circuit 73). Le signal de décalage NDECAJ entre dans le comparateur 75 (= 7) qui délivre un signal TDECA = 1 si NDECAJ = 7, sinon TDECA = . Le rôle du circuit 74 est de transformer $VPP_{n-J}$ en imposant la valeur de $PP_{n-J}$ à 0,1 ou $VPP_{n-J}$ selon les indications du tableau XIII.

Dans l'exemple décrit, les zones connexes ont au plus 7 points et donc J doit être au moins égal à 7. Toutefois, selon la fréquence de HP et la rapidité des circuits utilisés, J pourra être pris supérieur à 7, mais suffisamment inférieur à la durée de suppression de ligne pour ne pas perturber le fonctionnement de la mémoire d'état (figure 11).

Le circuit de calcul final de la prédiction est représenté à la figure 13. Il comprend :

— un circuit décodeur 80 à une entrée recevant le signal $\overline{P}_{n+1}$, ce circuit détectant la nullité de $\overline{P}_{n+1}$ et possédant une sortie délivrant un signal COM,
— un sélecteur 81 à deux entrées recevant respectivement les signaux $\overline{P}_{n+1}$ et $\hat{X}_n$, à une entrée de commande recevant le signal COM et à une sortie délivrant le signal $P_{n+1}$.

Le rôle du circuit décodeur 80 est de détecter la nullité de $\overline{P}_{n+1}$ : si $\overline{P}_{n+1}$ = 0, le signal COM de sortie du circuit, passe à 1, il agit alors sur le sélecteur 81 en imposant $P_{n+1}$ = $\hat{X}_n$. Si $\overline{P}_{n+1} \neq 0$, le signal COM a la valeur logique 0 et le sélecteur 81 impose alors $P_{n+1}$ = $\overline{P}_{n+1}$ pour la prédiction.

TABLEAU I

éléments de contour horizontaux                    éléments de contour verticaux

| ligne $\hat{X}_n$ | | | | | | | | | | | | | | | | | | | | |
|---|---|---|---|---|---|---|---|---|---|---|---|---|---|---|---|---|---|---|---|---|
| $EH_n$ | 0 | 1 | 1 | 0 | 1 | 1 | 0 | 0 | 1 | 1 | 1 | 1 | 1 | 1 | 1 | 1 | 1 | 0 | 0 | 0 |
| $EV_n$ | 0 | 0 | 0 | 0 | 0 | 1 | 1 | 0 | 0 | 0 | 0 | 0 | 0 | 1 | 1 | 0 | 1 | 1 | 1 | 0 |
| $\overline{H}_n$ | 0 | 1 | 2 | 2,0 | 1 | 2 | 2,0 | 0 | 1 | 2 | 3 | 4 | 5 | 6 | 7,0 | 1 | 2 | 2,0 | 0 | 0 |
| $\overline{V}_n$ | 0 | 0 | 0 | 0 | 0 | 1 | 2,0 | 0 | 0 | 0 | 0 | 0 | 0 | 1 | 2,0 | 0 | 1 | 2,0 | 1,0 | 0 |
| $TROU_n$ | 1 | 0 | 0 | 1 | 0 | 0 | 1 | 1 | 0 | 0 | 0 | 0 | 0 | 0 | 1 | 0 | 0 | 1 | 1 | 1 |
| $FZC_n$ | 0 | 0 | 0 | 0 | 0 | 0 | 1 | 0 | 0 | 0 | 0 | 0 | 0 | 0 | 1 | 0 | 0 | 1 | 1 | 0 |
| $\overline{H}$ | | | | | | | 2 | | | | | | | | 7 | | | 2 | 0 | |
| $\overline{V}$ | | | | | | | 2 | | | | | | | | 2 | | | 2 | 1 | |

0 021 948

TABLEAU IIa

| | | | | $\varphi > 0$ | | | | | | | | Initiali-sation | | | fin de contour | | | $\varphi < 0$ | | | |
|---|---|---|---|---|---|---|---|---|---|---|---|---|---|---|---|---|---|---|---|---|---|---|
| $EV'_n$ | 0 | 0 | 0 | 1 | 1 | 0 | 0 | 0 | 0 | 0 | 0 | 0 | 0 | 1 | 1 | 0 | 0 | 0 | 1 | 0 | 0 | 0 |
| $TROU_{n-1}$ | 1 | 1 | 1 | 1 | 0 | 0 | 0 | 1 | 1 | 1 | 0 | 0 | 0 | 1 | 1 | 1 | 0 | 0 | 0 | 1 | 1 | 1 |
| $\bar{S}$ | 0 | 0 | 0 | *1 | | | 0 | 0 | *0 | 0 | 0 | 0 | 0 | 0 | *0 | | | | | 0 | 0 | 0 |
| $EVZ_n$ | 0 | 0 | 0 | 1 | 1 | 0 | 0 | 0 | 0 | 0 | 0 | 0 | 0 | 0 | 0 | 0 | 0 | 0 | 1 | 0 | 0 | 0 |
| $EVC_n$ | 0 | 0 | 0 | 1 | 2 | 2 | 2 | 0 | 0 | 0 | 0 | 0 | 0 | 0 | 0 | 0 | 0 | 0 | 1 | 0 | 0 | 0 |
| $TI_n$ | 1 | 1 | 1 | 0 | 0 | 0 | 0 | 1 | 1 | 1 | 1 | 1 | 1 | 1 | 1 | 1 | 1 | 1 | 0 | 1 | 1 | 1 |
| $FZC_n$ | 0 | 0 | 0 | 0 | 0 | 0 | 1 | 0 | 0 | 0 | 0 | 0 | 1 | 0 | 0 | 0 | 0 | 0 | 1 | 0 | 0 | 0 |
| $TI$ | | | | | | | 0 | | | | | | | 1 | | | | | 0 | | | |

0 021 948

TABLEAU IIb

| | | | | | | | | | | | | | | | | | | | | | | |
|---|---|---|---|---|---|---|---|---|---|---|---|---|---|---|---|---|---|---|---|---|---|---|
| $EVZ_n$ | 0 | 0 | 1 | 1 | 0 | 0 | 0 | 0 | 1 | 0 | 0 | 0 | 1 | 1 | 0 | 0 | 1 | 1 | 0 | 0 | 0 | 0 |
| $FZC'_n$ | 0 | 0 | 0 | 1 | 0 | 0 | 0 | 0 | 1 | 0 | 0 | 0 | 0 | 1 | 0 | 0 | 0 | 0 | 0 | 1 | 0 | 0 |
| $AEVZ_n$ | 0 | 0 | 1 | 2 | 0 | 0 | 0 | 0 | 1 | 0 | 0 | 0 | 1 | 2 | 0 | 0 | 1 | 2 | 2 | 2 | 0 | 0 |
| $DEVZ_n$ | 0 | 0 | 1 | 1 | 0 | 0 | 0 | 0 | 1 | 0 | 0 | 0 | 1 | 1 | 0 | 0 | 1 | 1 | 1 | 1 | 0 | 0 |
| $FCH_n$ | 0 | 0 | 1 | 1 | 1 | 0 | 0 | 0 | 1 | 1 | 1 | 1 | 2 | 2 | 2 | 2 | 3 | 3 | 3 | 0 | 0 | 0 |
| PREM | 1 | 1 | 1 | 1 | 1 | 1 | 1 | 1 | 1 | 1 | 1 | 1 | 0 | 0 | 0 | 0 | 0 | 0 | 0 | 1 | 1 | 1 |

ligne précédente

ligne courante

**TABLEAU IIIa**

| NL' | NL'$_1$ | $\alpha$ |
|---|---|---|
| 0 | 0 | 0 |
| $\geqslant 1$ | 0 | 1 |
| 0 | $\geqslant 1$ | 0 |
| $\geqslant 1$ | $\geqslant 1$ | 1/2 |

**TABLEAU IIIb**

| NL', NL'$_1$ | $\alpha$ |
|---|---|
| $\mid$ NL' $-$ NL'$_1$ $\mid$ $\geqslant 1$ | 1/2 |
| NL' $>$ NL'$_1$ $+ 1$ | 3/4 |
| NL' $<$ NL'$_1$ $- 1$ | 1/4 |

**TABLEAU IV**

| E | EJ | E' | E'$_1$ | B' | Ĕ | EE | EI | Numérisation | |
|---|---|---|---|---|---|---|---|---|---|
| | | | | | | | | pas | nombre d'e.b. |
| NM | NMJ | NM' | NM'$_1$ | NMB' | NM̃ | NME | NMI | 1 (entier) | 2 |
| H | HJ | H' | H'$_1$ | HB' | H̃ | HE | HI | $\times$ (rationnel positif) (*) | 4 ou 5 |
| V | VJ | V' | V'$_1$ | VB' | Ṽ | VE | VI | $\times$ (rationnel positif) (*) | 4 ou 5 |
| NP | NPJ | NP' | NP'$_1$ | NPB' | NP̃ | NPE | NPI | 1 (entier) | 3 |
| S | SJ | S' | S'$_1$ | SB' | Š | SE | SI | signe (**) | 1 |
| $\mid$NS$\mid$ | $\mid$NSJ$\mid$ | $\mid$NS'$\mid$ | $\mid$NS'$_1$$\mid$ | $\mid$NSB'$\mid$ | $\mid$NŠ$\mid$ | $\mid$NSE$\mid$ | $\mid$NSI$\mid$ | 1 (entier) (**) | 2 |
| Q | QJ | Q' | Q'$_1$ | QB' | Q̃ | QE | QI | 1 (entier) | 1 |

Notes:
(*) dans tous les cas, ce nombre prend toutes les valeurs rationnelles discrètes du segment [0,8[, autorisées par le nombre d'e.b. disponibles, par exemple, pour 4 e.b., le pas de discrétisation est alors de 0,5, et les valeurs permises sont (0, 0.5, 1, 1.5, 2, 2.5, 3, 3.5, 4, 4.5, 5, 5.5, 6, 6.5, 7, 7.5),
(**) $\mid$NS$\mid$ affecté du signe S est noté NS (NSJ, NS, NS'$_1$, NSB', NŠ, NSE, NSI), et est utilisé avec cette notation dans les tableaux V et IX.

**TABLEAU V**

| E' | E'$_1$ | B' |
|---|---|---|
| NM' | NM'$_1$ | NMB' $=$ Max (NM', NM'$_1$) |
| H' | H'$_1$ | HB' $= \mid \alpha$ S'H' $+ (1 - \alpha)$ S'$_1$H'$_1$ $\mid$ |
| V' | V'$_1$ | VB' $= \alpha$ V' $+ (1 - \alpha)$ V'$_1$ |
| NP' | NP'$_1$ | NPB' $= \alpha$ NP' $+ (1 - \alpha)$ NP'$_1$ |
| NS' | NS'$_1$ | NSP' $= \alpha$ NS' $+ (1 - \alpha)$ NS'$_1$ |
| Q' | Q'$_1$ | QB' $= 0$ |

TABLEAU VIa

| $Z = H/V$ | $\theta$ |
|---|---|
| $Z \geqslant 7,6$ | 7 |
| $4,6 \leqslant Z < 7,6$ | 6 |
| $2,6 \leqslant Z < 4,6$ | 5 |
| $1,4 \leqslant Z < 2,6$ | 4 |
| $0,9 < Z < 1,4$ | 3 |
| $0,4 < Z \leqslant 0,9$ | 2 |
| $0,2 < Z \leqslant 0,4$ | 1 |
| $Z \leqslant 0,2$ | 0 |

TABLEAU VIb

| | $t = \begin{array}{l} H - V + 1 \text{ si } H \geqslant V \\ V - H + 1 \text{ si } H < V \end{array}$ | $\theta$ |
|---|---|---|
| $H \geqslant V$ | $t > 3,4$ | 7 |
| | $2,1 < t \leqslant 3,4$ | 6 |
| | $1,4 < t \leqslant 2,1$ | 5 |
| | $1 \ \leqslant t \leqslant 1,4$ | 4 |
| $H < V$ | $1 \ < t \leqslant 1,7$ | 3 |
| | $1,7 < t \leqslant 3$ | 2 |
| | $3 \ < t \leqslant 2$ | 1 |
| | $t > 8$ | 0 |

TABLEAU VII

| SS | $\bar{Q}$ | Q | RUPTS |
|---|---|---|---|
| 1 | 1 | 0 | 1 |
| 1 | 0 | 1 | 0 |
| 0 | 0 | 0 | 0 |
| 0 | 1 | 0 | 0 |

TABLEAU VIII

| $N\tilde{M}$ | $\beta$ |
|---|---|
| 0 | 1 |
| 1 | 1/2 |
| $\geqslant 2$ | 3/8 |

Tableau IX

| $\bar{E}$ | $\check{E}$ | EE | | EI $\bar{H} \neq 0$ | $\bar{H} = 0$ |
|---|---|---|---|---|---|
| . | N$\tilde{M}$ | si $\bar{H} \neq 0$ : NME = N$\tilde{M}$ + 1 <br> si $\bar{H} = 0$ : NME = N$\tilde{M}$ | | 1 | 0 |
| $\bar{H}$ | $\tilde{H}$ | si $\bar{H} \neq 0$ : HE = $\lfloor \beta \bar{H} \bar{S} + (1-\beta) \check{S} \tilde{H} \rfloor$ <br> si $\bar{H} = 0$ : HE = $\tilde{H}$ | | $\bar{H}$ | 0 |
| $\bar{V}$ | $\check{V}$ | si $\bar{H} \neq 0$ : VE = $\beta (\bar{V} + N\check{P}) + (1-\beta) \check{V}$ <br> si $\bar{H} = 0$ : VE = $\check{V}$ | | $\bar{V}$ | 0 |
| . | N$\check{P}$ | si $\bar{H} \neq 0$ : NPE = 0 <br> si $\bar{H} = 0$ : NPE = N$\check{P}$ + 1 | | 0 | 0 |
| $\bar{S}$ | N$\check{S}$ | si $\bar{H} \neq 0$ et N$\tilde{M} > 2$ : NSE = N$\check{S}$ + $\bar{S}$ <br> si $\bar{H} \neq 0$ et N$\tilde{M} \leqslant 1$ : NSE = $\bar{S}$ <br> si $\bar{H} = 0$ et N$\tilde{M} \geqslant 1$ : NSE = N$\check{S}$ <br> si $\bar{H} = 0$ et N$\tilde{M} = 0$ : NSE = N$\tilde{M}$ = 0 | | SI = $\bar{S}$, <br> $|NSI| = 1$ | SI = 1, <br> $|NSI| = 0$ |
| . | $\check{Q}$ | QE = Q | | 0 | 0 |

Tableau XI

| | circuit 67 | | circuit 68 | | circuit 69a | | circuit 69b | | circuit 79 |
|---|---|---|---|---|---|---|---|---|---|
| | $OEPP_1$ | $OEPP_2$ | $OLPP_1$ | $OLPP_2$ | $pp_1$ | $pp_2$ | $AEPP_1$ | $AEPP_2$ | $\bar{P}_{n+1}$ |
| PL = 0 | HP | OE | HP | O | O | $PP_{n-J}$ | ALPP | AEP | $p_1$ |
| PL = 1 | OE | HP | O | HP | $PP_{n-J}$ | O | AEP | ALPP | $p_2$ |

Tableau X

| | circuit 57a | | circuit 57b | | circuit 57c | | circuit 60 | |
|---|---|---|---|---|---|---|---|---|
| | $OE_1$ | $OE_2$ | $OL_1$ | $OL_2$ | $AL_1$ | $AL_2$ | E' | EJ |
| PL = 0 | O | $FZC_n$ | OL' | OLJ | AL' | ALJ | $e'_1$ | $e'_2$ |
| PL = 1 | $FZC_n$ | O | OLJ | OL' | ALJ | AL' | $e'_2$ | $e'_1$ |

Tableau XII

| $\theta J$ | NDECAJ | $\gamma J$ | $\theta J$ | NDECAJ | $\gamma J$ |
|---|---|---|---|---|---|
| −7 | −7 | 0 | 0 | 0 | 0 |
| −6 | −5 | $\frac{1}{2}$ | 1 | 1 | $\frac{3}{4}$ |
| −5 | −3 | $\frac{1}{2}$ | 2 | 1 | $\frac{1}{2}$ |
| −4 | −1 | $\frac{3}{4}$ | 3 | 1 | 0 |
| −3 | −1 | 0 | 4 | 2 | $\frac{1}{4}$ |
| −2 | 0 | $\frac{1}{2}$ | 5 | 4 | $\frac{1}{2}$ |
| −1 | 0 | $\frac{1}{4}$ | 6 | 6 | $\frac{1}{2}$ |
|  |  |  | 7 | 7 | 0 |

Tableau XIII

| TDECA | $VPP_{n-J}$ | $PP_{n-J}$ |
|---|---|---|
| 0 (NDECAJ < 7) | $\geqslant 1$ | $VPP_{n-J}$ |
|  | $= 0$ | 1 |
| 1 (NDECAJ = 7) | quelconque | 0 |

## Revendications

1. Dispositif pour le suivi et l'estimation récursive de l'état local de contours d'images définies par des lignes de N points répartis selon une structure d'échantillonnage orthogonale, ces points étant définis par des échantillons numériques successifs, ce dispositif comprenant:

— une mémoire séquentielle possédant une entrée qui reçoit la suite des échantillons numériques et des sorties délivrant des échantillons antérieurs de la même ligne et au moins un échantillon de la ligne précédente,
— un circuit d'examen et d'estimation de la direction du contour d'image qui compare les variations entre deux échantillons et qui calcule une grandeur représentative du contour,

caractérisé en ce que:

A) la mémoire séquentielle est constituée de trois circuits (9), (10) et (11) possédant une entrée qui reçoit la suite des échantillons numériques, notés $\hat{X}_n$, où n prend successivement les valeurs entières de 1 à N, et au moins trois sorties délivrant, lorsque l'échantillon de rang n+1 est reçu à l'entrée, respectivement: l'échantillon de rang n, soit $\hat{X}_n$, l'échantillon de rang n−1, soit $\hat{X}_{n-1}$, appartenant à la même ligne que l'échantillon reçu et l'échantillon reçu et l'échantillon de rang n appartenant à la ligne précédente, soit $\hat{X}'_n$.
B) le circuit (15) d'examen comprend:
  — des moyens (21b, 22b) pour détecter entre deux échantillons $\hat{X}_{n-1}$ et $\hat{X}'_n$ successifs d'une même ligne, la présence d'une variation de la valeur de l'échantillon qui excède un certain seuil, et pour engendrer un signal correspondant, dit »d'élément de contour vertical« et noté $EV_n$,
  — des moyens (21a, 22a) pour détecter, entre deux échantillons $\hat{X}_n$, et $\hat{X}_n$ de même rang mais appartenant à deux lignes adjacentes, la présence d'une variation de la valeur de l'échantillon qui excède un certain seuil et pour engendrer un signal correspondant dit »d'élément de contour horizontal« et noté $EH_n$,
  — deux éléments de contour étant dits connexes s'ils sont connectés, un contour de l'image étant alors défini par un ensemble d'éléments de contours connexes,
  — un moyen (23a, 25a, 26, 23b, 25b, 27) pour détecter l'absence d'élément de contour au point de rang n, ce moyen délivrant un signal noté $TROU_n$,
  — un moyen (23a, 29a, 23b, 29b) pour compter le nombre total d'éléments de contour horizontaux et le nombre d'éléments de contour verticaux examinés le long d'une ligne pour chaque zone connexe, ces nombres étant traduits en signaux $\overline{H}$ et $\overline{V}$, en fin de zone connexe,
  — un moyen (28) pour détecter les éléments de contour horizontaux et verticaux connexes, et pour détecter les ensembles de tels éléments connexes, le long d'une ligne, ces ensembles étant dénommés connexités, chaque connexité étant comprise entre un premier élément de contour et un dernier élément de contour, ce moyen étant apte à délivrer un signal lorsqu'une connexité se termine au point de rang n, signal noté $FZC_n$,
  — le circuit (15) d'examen possédant ainsi trois entrées recevant les échantillons $\hat{X}_n$, $\hat{X}_{n-1}$ et $\hat{X}_n$ et six sorties délivrant respectivement les signaux $EV_n$, $EH_n$, $\overline{V}$, $\overline{H}$, $FZC_n$, $TROU_n$,
C une boucle fonctionnant de manière récursive, comprenant un moyen (16, 17, 18) pour calculer une grandeur représentative du contour, dénommée état du contour et notée E, cet état étant constitué par un ensemble de nombres qui sont:
  — les nombres (H, V) moyens d'éléments de contour respectivement horizontaux et verticaux, filtrés récursivement au cours du suivi du contour,
  — le nombre (NM) de marches précédentes observées au cours du suivi du contour,
  — le nombre (NP) d'éléments de contour verticaux connexes, mais non connexes à des éléments de contour horizontaux, observés aux lignes précédentes de la ligne en cours de traitement,
  — la sommes partielle (NS) des signes observés ($\overline{S}$), au cours du suivi du contour, sa valeur absolue ($|NS|$) et son signe (S) dit signe du contour,
  — le nombre Q qui comptabilise les inversions du signe observé $\theta$,
  ledit moyen (16, 17, 18) étant apte à mémoriser l'état E' obtenu pour la ligne précédant celle qui est examinée et pour calculer, en fonction de cet état E' et des signaux $EH_n$, $TROU_n$, $FZC_n$, $\overline{V}$ et $\overline{H}$ obtenu pour la ligne examinée, le nouvel état E du contour à cette ligne examinée.

2. Dispositif de prédiction d'échantillons pour des images définies par des lignes de N points répartis selon une structure d'échantillonage orthogonale, ces points étant définis par des échantillons numériques, ce dispositif comprenant un dispositif de suivi et d'estimation de la direction du contour d'images et un circuit de calcul d'une prédiction travaillant à partir d'une combinaison linéaire de signaux définissant l'état du contour, caractérisé en ce que:

A) le dispositif pour le suivi et l'estimation récursive de l'orientation des contours de l'image est conforme au dispositif de la revendication 1 dans lequel:

— la mémoire séquentielle (9, 10, 11) est pourvue de deux sorties supplémentaires délivrant les échantillons $\hat{X}_{n-J+1}$ et $\hat{X}_{n-J}$,

— le circuit (15) d'examen possède deux sorties délivrant respectivement:

    i)    un signal noté $EV_n$ indiquant la présence d'un élément de contour vertical pour le point de rang n,

    ii)   le signal $FZC_n$,

— la boucle récursive possède une sortie délivrant un signal noté EJ déterminant l'état du contour au point de rang n—J,

B) le circuit de calcul de la prédiction comprend un circuit de préparation de cette prédiction (13) et un circuit de calcul final de la prédiction, le circuit de préparation (13) possédant cinq entrées principales, deux d'entre elles recevant les échantillons $\hat{X}_{n-J}$ et $\hat{X}_{n-J+1}$ délivrés par la mémoire, les trois autres recevant les signaux EJ, $EV_n$, et $FZC_n$ délivrés par le circuit (12) d'examen et d'estimation récursive de l'état du contour, ce circuit (13) comprenant des moyens pour calculer une combinaison linéaire des signaux $\hat{X}_{n-J}$ et $\hat{X}_{n-J+1}$ qui dépend de l'état EJ et des signaux $EV_n$ et $FZC_n$, et une mémoire à accès direct (79) qui stocke ladite combinaison à une adresse qui dépend du rang n—J et de l'état EJ, cette mémoire (79) ayant une sortie qui délivre un signal $\bar{P}_{n+1}$ pour l'échantillon d'entrée de rang n+1, le circuit (14) de calcul final de la prédiction possédant deux entrées, l'une recevant l'échantillon $\hat{X}_n$ de la mémoire et l'autre le signal $\bar{P}_{n+1}$ du circuit (13) de préparation de la prédiction, ce circuit comprenant des moyens pour sélectionner $\bar{P}_{n+1}$ ou $\hat{X}_n$ selon les informations contenues dans $\bar{P}_{n+1}$ et pour appliquer la valeur sélectionner, soit $P_{n+1}$, sur une sortie, ce signal constituant l'échantillon de prédiction de rang n+1.

3. Dispositif selon l'une quelconque des revendications 1 et 2, caractérisé en ce que la boucle récursive du circuit (12) d'examen et d'estimation comprend:

— une première mémoire (18), dite mémoire d'état, recevant les signaux E et $FZC_n$ relatifs à la ligne en cours d'examen et un signal $FZC'_n$ de fin de connexité pour la ligne précédente et délivrant un signal d'état E' relatif à la ligne précédente ainsi que le signal d'état EJ, relatif à une éventuelle connexité au point de rang n—J de la ligne courante,

— une seconde mémoire (19), à N registres, qui reçoit le signal $FZC_n$ de fin de connexité relatif à la ligne en cours d'examen et qui délivre le signal $FZC'_n$ relatif à la ligne précédente,

— une troisième mémoire 20 recevant le signal $EV_n$ et délivrant un signal $EV'_n$ relatif à la ligne précédente,

— un circuit (16) d'analyse des connexités d'une ligne à la suivante, ce circuit possédant six entrées recevant respectivement les signaux $EH_n$, $TROU_n$ et $FZC_n$ du circuit (15) d'examen des connexités, et E', $FZC'_n$ et $EV'_n$ des trois mémoires, ce circuit possédant des moyens pour extraire, des six signaux qu'il reçoit, trois signaux utiles à l'étude d'une connexité et relatifs à la partie de la ligne précédente située au contact de ladite connexité, ces trois signaux étant respectivement:

    ·    un signal $\bar{S}$ donnant le signe de l'orientation du contour de l'image, tel qu'observé à la ligne courante,

    ·    un signal TI indiquant la nécessité d'une initialisation de l'état en début de contour,

    ·    un signal $\tilde{E}$ relatif à un ancien état équivalent pour la connexité en cours d'examen dans le cas d'observation d'une fourche, c'est-à-dire d'une situation où deux connexités différentes de la ligne précédente sont reliées toutes deux à une même connexité de la ligne en cours d'examen,

— un circuit (17) de réactualisation de l'état, à cinq entrées recevant respectivement les signaux $\bar{H}$ et $\bar{V}$ du circuit (15) d'examen es connexités et $\bar{S}$, TI, et $\tilde{E}$ du circuit (16) d'analyse des connexités d'une ligne à la suivante, et à une sortie délivrant un signal d'état E obtenu soit à partir de l'ancien état $\tilde{E}$ et des observations plus récentes $\bar{S}$, $\bar{H}$, $\bar{V}$, soit uniquement à partir des observations les plus récentes $\bar{S}$, $\bar{H}$, $\bar{V}$, cas qui est indiqué par le signal TI.

4. Dispositif selon la revendication 2, caractérisé en ce que le circuit (15) d'examen des zones connexes comprend:

A) une première voie, de traitement des éléments de contour horizontaux comprenant:

— un premier circuit différentiateur (21a à deux entrées recevant les signaux $\hat{X}'_n$ et $\hat{X}_n$, et une sortie délivrant un signal $GV_n$ de gradient vertical,

— un premier comparateur (22a) recevant le signal $GV_n$ et délivrant le signal logique $EH_n$ représentant un élément de contour horizontal,

— une sortie délivrant ledit signal $EH_n$,

— un premier accumulateur (23a) recevant les signaux $EH_n$ et les comptabilisant, pour délivrer un signal $\bar{H}_n$ représentant le nombre d'éléments de contour verticaux, cet accumulateur étant remis à zéro par le signal $TROU_n$,

— un premier comparateur (25a) qui reçoit le signal $\bar{H}_n$ et le compare à un nombre prédéterminé et délivre un signal de dépassement $DH_n$, lorsque $\bar{H}_n$ excède ce nombre,

— un premier registre (29a) qui charge le signal $\bar{H}_n$, ce registre étant commandé par le signal $FZC_n$

et délivrant le signal $\overline{H}$, nombre d'éléments de contour horizontaux de la zone connexe examinée,
— un inverseur (26) recevant $EH_n$ et délivrant un signal complémentaire $\overline{EH}_n$,

B) une deuxième voie, de traitement des éléments de contour verticaux, comprenant:
— un second circuit différentiateur (21b) à deux entrées recevant les signaux $\hat{X}_n$ et $\hat{X}_{n-1}$, et une sortie délivrant un signal $GH_n$ de gradient horizontal,
— un second comparateur (22b) recevant le signal $GH_n$ et délivrant le signal logique $EV_n$ représentant un élément de contour vertical,
— une sortie délivrant ledit signal $EV_n$,
— un second accumulateur (23b), recevant les signaux $EV_n$ et les comptabilisant, pour délivrer le signal $\overline{V}_n$ représentant le nombre d'éléments de contour horizontaux, cet accumulateur étant remis à zéro par le signal $TROU_n$,
— un second comparateur (25b) qui reçoit le signal $\overline{V}_n$, et le compare à un nombre prédéterminé et délivre un signal de dépassement $DV_n$ lorsque $\overline{V}_n$ dépasse ce nombre,
— un second registre (29b) qui charge le signal $\overline{V}_n$, ce registre étant commandé par le signal $FZC_n$, et délivrant le signal $\overline{V}$, nombre d'éléments de contour verticaux de la zone connexe examinée,
— un comparateur 24 recevant le signal $\overline{V}_n$ et comparant ce signal à 1, et délivrant un signal $DZV_n$,

C) une porte logique de type OU à trois entrées recevant respectivement les signaux $DH_n$, $\overline{EH}_n$ et $DV_n$ et une sortie délivrant le signal $TROU_n$,

D) une porte logique de type ET à deux entrées recevant les signaux $TROU_n$ et $DZV_n$ et une sortie délivrant le signal $FZC_n$.

5. Dispositif selon la revendication 3, caractérisé en ce que le circuit (16) d'analyse des zones connexes d'une ligne à la suivante comprend:

— un premier circuit retard (30a) à une entrée recevant le signal $TROU_n$ et à une sortie délivrant un signal retarcé $TROU_{n-1}$,
— un registre (31) à deux entrées, l'une de signal, l'autre d'autorisation d'écriture, recevant respectivement les signaux $TROU_{n-1}$ et $EV_n$ et à une sortie délivrant le signal $EH_{n-1}$,
— un second circuit retard (30b) à une entrée recevant le signal $EH_n$ et à une sortie délivrant un signal $EH_{n-1}$,
— une porte logique 32, de type OU, à deux entrées recevant les signaux $EH_{n-1}$ et $EH_n$ et à une sortie délivrant un signal $EHH_n$,
— une porte logique (33), de type ET, à deux entrées recevant les signaux $EHH_n$ et $EV_n$ et à une sortie délivrant un signal $EVZ_n$,
— une première voie de traitement du signal $EVZ_n$ comprenant:
    i) un premier accumulateur (34a) ayant une entrée de remise à zéro recevant le signal $TROU_n$, une entrée de signal recevant $EVZ_n$ et une sortie délivrant un signal $EVC_n$,
    ii) un premier comparateur (35a) par rapport à 1, à une entrée recevant $EVC_n$ et à une sortie délivrant un signal $TI_n$,
    iii) un registre (36) possédant une entrée d'écriture recevant le signal $FZC_n$, une entrée de signal recevant $TI_n$ et une sortie délivrant un signal $TI$ de nécessité d'une initialisation,
— une seconde voie de traitement du signal $EVZ_n$ comprenant:
    i) un second accumulateur (34b) ayant une entrée de remise à zéro recevant le signal $FZC'_n$, une entrée de signal recevant $EVZ_n$ et une sortie délivrant un signal $AEVZ_n$,
    ii) un second comparateur (35b) par rapport à 1, à une entrée recevant $AEVZ_n$ et à une sortie délivrant un signal $DEVZ_n$,
    iii) un accumulateur (37) possédant une entrée de remise à zéro recevant le signal $TROU_n$, une entrée d'autorisation de l'horloge recevant le signal $DEVZ_n$, une entrée recevant un signal 1, et une sortie délivrant un signal $FCH_n$,
    iiii) un comparateur (38) par rapport à 1, à une entrée recevant le signal $FCH_n$ et à une sortie délivrant un signal de commande PREM,
— un circuit de retard (39), à une entrée d'autorisation de l'horloge HP recevant $FZC'_n$, à une entrée de signal recevant le signal d'état $E'$ et à une sortie délivrant un signal d'état $E'_1$,
— un circuit arithmétique et logique (40) à deux entrées, recevant l'une $E'_1$ et l'autre $E'$, et à une sortie délivrant un signal $B'$ de pondération des signaux $E'_1$ et $E'$,
— enfin, un circuit sélecteur (41) à une entrée de commande recevant le signal PREM, à deux entrées recevant les signaux $B'$ et $E'$, et à une sortie délivrant le signal $\overline{E}$ d'état équivalent en présence de fourche.

6. Dispositif selon la revendication 5, caractérisé en ce que le circuit arithmétique et logique (40) comprend:

— deux circuit additionneurs (42a) et (42b) à deux entrées recevant respectivement des signaux $NP'_1$ et $NM'_1$ regroupant certains éléments binaires du signal d'état $E'_1$ et des signaux $NP'$ et $NM'$ extraits du signal d'état E' et à une sortie délivrant respectivement des signaux NL'₁ = NM'₁ + NP'₁ et NL' = NM' + NP',

— un circuit transcodeur (43) à deux entrées recevant les signaux NL'₁ et NL' et à une sortie délivrant un coefficient pondérateur *a* servant à tenir compte de la longueur relative des deux contours,

— un circuit arithmétique et logique (44) à trois entrées recevant *a*, E' et E'₁ et à une sortie délivrant le signal B'.

7. Dispositif selon la revendication 3, caractérisé en ce que le circuit (17) de réactualisation de l'état local comprend:

— un premier transcodeur (45a) à deux entrées recevant des signaux d'éléments de contour horizontaux et verticaux H̃ et Ṽ extraits du signal d'état Ẽ, et à une sortie délivrant un signal $\tilde{\theta}$ correspondant à la valeur absolue d'un angle ancien d'orientation du contour,

— un second transcodeur (45b) à deux entrées recevant des signaux d'éléments de contour horizontaux et verticaux H̄ et V̄ issus du circuit (15) et à une sortie délivrant un signal $\bar{\theta}$ correspondant à la valeur absolue d'un angle d'orientation du contour examiné,

— un circuit différentiateur à seuil (46) à deux entrées recevant les signaux $\tilde{\theta}$ et $\bar{\theta}$ et à une sortie délivrant un signal T$\theta$,

— un circuit comparateur (47) par rapport à 2, à une entrée recevant un signal NM̃ extrait du signal d'état Ẽ et représentant le nombre de marches du contour, et à une sortie délivrant un signal TNM,

— une porte logique (50) de type ET à deux entrées recevant respectivement les signaux T$\theta$ et TNM et à une sortie délivrant un signal RUPT$\theta$,

— un circuit logique (48), de type OU-exclusif, à deux entrées recevant respectivement le signal S̃ extrait du signal d'état Ẽ et le signal S̄ extrait du circuit (16) et à une sortie délivrant un signal SS,

— un circuit combinatoire (49) à deux entrées recevant respectivement un signal Q̃ extrait du signal Ẽ et le signal SS, et à deux sorties, l'une délivrant un signal RUPTS et l'autre un signal Q,

— un circuit logique (51), de type OU, à trois entrées recevant respectivement le signal TI, le signal RUPT$\theta$, et le signal RUPTS et à une sortie délivrant un signal RUPT,

— un circuit arithmétique et logique (52) de réactualisation de l'état, à neuf entrées recevant respectivement le signal Q et les signaux provenant de Ẽ soit: NM̃, NS̃, H̃, Ṽ, NP̃, ainsi que les signaux d'observation H̄, V̄ et S̄, et à une sortie délivrant un signal EE de réactualisation,

— un transcodeur (53) à trois entrées recevant respectivement les signaux H̄, V̄ et S̄ et à une sortie délivrant un signal EI d'état initialisé,

— un sélecteur (54) à entrées, recevant les signaux EE et EI, à une entrée de commande recevant le signal RUPT, et à une sortie délivrant le signal E.

8. Dispositif selon la revendication 3, caractérisé en ce que la mémoire d'état (18) comprend:

— un circuit accumulateur (56a) à une entrée recevant le signal FZC$_n$, cet accumulateur étant actionné par le signal de service HP et remis à zéro par DL, et à une sortie délivrant un signal AE,

— un circuit accumulateur (57a), à une entrée recevant le signal FZC$_n$ et actionné par le signal PL, et à deux sorties délivrant des signaux OE₁ et OE₂,

— un circuit mémoire (59) à une entrée recevant le signal FZC$_n$ actionné par HP et à une sortie délivrant le signal FZC$_{n-J}$,

— un circuit OU (58a) à deux entrées recevant le signal FZC$_{n-J}$ et DL et à une sortie délivrant un signal DLJ,

— un accumulateur (56b) à deux entrées, recevant le signal FZC$_{n-J}$ et DL, actionné par HP, et à une sortie délivrant un signal ALJ,

— un circuit OU (58b) à deux entrées recevant un signal FZC'$_n$ et DL actionné par HP et à une sortie délivrant un signal AL',

— un circuit aiguilleur (57b) à deux entrées recevant les signaux OLJ et OL' et à deux sorties délivrant des signaux OL₁ et OL₂, cet aiguilleur étant actionné par PI,

— un circuit aiguilleur (57c) à deux entrées recevant les signaux ALJ et AL', actionné par PL et à deux sorties délivrant des signaux AL₁ et AL₂,

— une première mémoire à accès direct (55a) actionnée par HP, à cinq entrées recevant les signaux AE, E, OE₁, AL₁ et OL₁ et à une sortie délivrant un signal e'₁,

— une seconde mémoire à accès direct (55b) actionné par HP, à cinq entrées recevant les signaux AE, E, OE₂, AI₂ et OL₂ et à une sortie délivrant un signal e'₂,

— un circuit aiguilleur (60) actionné par PL, à deux entrées recevant les signaux e'₁ et e'₂, et à deux sorties délivrant des signaux E' et EJ.

9. Dispositif selon la revendication 2, caractérisé en ce que le circuit (13) de préparation et de mémorisation de la prédiction comprend:

— une première mémoire (61) à une entrée recevant le signal EV$_n$ et à une sortie délivrant un signal retardé $EV_{n-J}$,
- un circuit inverseur (63) à une entrée recevant $EV_{n-J}$ et délivrant un signal complémentaire $\overline{EV}_{n-J}$,
- une seconde mémoire (62) à une entrée recevant le signal $FZC_n$ et à une sortie délivrant un signal retardé $FZC_{n-J-1}$,
- une porte logique (64) de type ET à deux entrées recevant respectivement les signaux $\overline{EV}_{n-J}$ et $FZC_{n-J-1}$ et à une sortie délivrant $DT_{n-J}$,
- une bascule 65 à deux entrées recevant respectivement les signaux $EV_{n-J}$ et $DT_{n-J}$ et à une sortie délivrant un signal $ZC_{n-J}$,
- une porte logique (66) de type OU à deux entrées, l'une recevant le signal d'horloge HP et l'autre le signal $ZC_{n-J}$ et à une sortie délivrant un signal OE,
- un circuit aiguilleur (67) à deux entrées recevant l'une le signal d'horloge HP, l'autre le signal OE, à une entrée de commande recevant le signal PL, et à deux sorties délivrant respectivement un signal $OEPP_1$ et un signal $OEPP_2$,
- un circuit aiguilleur (68) à deux entrées recevant respectivement le signal d'horloge et un signal 0 de valeur nulle, à une entrée de commande recevant le signal de service PL et à deux sorties délivrant respectivement des signaux $OLPP_1$ et $OLPP_2$,
- un circuit transcodeur (73) à deux entrées recevant respectivement les signaux HJ et VJ extraits du signal d'état EJ et à deux sorties, délivrant respectivement un signal $yJ$ et un signal NDECAJ,
- un comparateur (75) par rapport à un nombre spécifié, à une entrée recevant le signal NDECAJ et à une sortie délivrant le signal TDECA,
- un compteur (77) à une entrée de remise à zéro recevant le signal de service DL et une entrée recevant le signal d'horloge HP et à une sortie délivrant un signal n,
- un circuit arithmétique (76) à deux entrées recevant respectivement les signaux NDECAJ et n, et à une sortie délivrant le signal AEP correspondant à $n - J + NDECAJ$,
- un additionneur (78) à deux entrées, l'une recevant le nombre n et l'autre le nombre 1 et à une sortie délivrant le signal ALPP correspondant à $n + 1$,
- un premier aiguilleur (69a) à deux entrées recevant respectivement le signal $PP_{n-J}$ et un signal 0 nul, et à une entrée de commande recevant le signal de service PL, et à deux sorties délivrant respectivement des signaux $pp_1$ et $pp_2$,
- un second aiguilleur (69b) à deux entrées recevant respectivement les signaux ALPP et AEP, à une entrée de commande recevant le signal de service PL, et à deux sorties délivrant respectivement des signaux $AEPP_1$ et $AEPP_2$,
- une première mémoire (70) à accès direct, à cinq entrées recevant respectivement les signaux $OEPP_1$, $OLPP_1$, $AEPP_1$, ALPP et $pp_1$ et à une sortie délivrant un signal $p_1$,
- une seconde mémoire RAM (71) à accès direct, à cinq entrées recevant respectivement les signaux $OEPP_2$, $OLPP_2$, $AEPP_2$, ALPP et $pp_2$, et à une sortie délivrant un signal $p_2$,
- un sélecteur (79) à deux entrées recevant respectivement les signaux $p_1$ et $p_2$ à une entrée de commande recevant le signal de service PL, et une sortie délivrant un signal de prédiction préparé $\overline{P}_{n+1}$.

10. Dispositif selon la revendication 2, caractérisé en ce que le circuit 14 de calcul final de la prédiction comprend:

- un circuit décodeur 80 à une entrée recevant le signal $\overline{P}_{n+1}$, ce circuit détectant la nullité de $\overline{P}_{n+1}$ et possédant une sortie délivrant un signal COM,
- un sélecteur (81) à deux entrées recevant respectivement les signaux $\overline{P}_{n+1}$ et $\hat{X}_n$, à une entrée de commande recevant le signal COM et à une sortie délivrant le signal $P_{n+1}$.

11. Codeur à modulation par impulsions codées de type différentiel, comprenant:

- un soustracteur (1) à deux entrées, l'une recevant un échantillon numérique $X_n$ et l'autre un signal numérique de prédiction $P_n$, et à une sortie délivrant un signal différence $d_n$,
- un quantificateur-codeur (2) recevant le signal $d_n$ et délivrant un signal codé $C_n$,
- un quantificateur-décodeur (4) recevant le signal $C_n$ et délivrant un signal de différence reconstruit $\hat{d}_n$,
- un additionneur (5) à deux entrées recevant respectivement le signal $\hat{d}_n$ et un signal de prédiction $P_n$ et à une sortie délivrant un échantillon $\hat{X}_n$,
- un circuit prédicteur (6) recevant $\hat{X}_n$ et délivrant l'échantillon de prédiction $P_n$,
caractérisé en ce que le circuit prédicteur (6) est conforme au dispositif selon l'une quelconque des revendications 2 à 10.

12. Codeur à modulation par impulsions codées de type différentiel, comprenant:

- un soustracteur (1) à deux entrées, l'une recevant un échantillon numérique $X_n$ et l'autre un signal numérique de prédiction $P_n$, et à une sortie délivrant un signal différence $d_n$,
- un quantificateur-codeur (2) recevant le signal $d_n$ et délivrant un signal codé $C_n$,
- un quantificateur (7) recevant le signal $d_n$ et délivrant un signal de différence reconstruit $\hat{d}_n$,

25

- un additionneur (5) à deux entrées recevant respectivement le signal $\hat{d}_n$ et un signal de prédiction $P_n$ et à une sortie délivrant un échantillon $\hat{X}_n$,
- un circuit prédicteur (6) recevant $\hat{X}_n$ et délivrant l'échantillon de prédiction $P_n$,

caractérisé en ce que le circuit prédicteur (6) est conforme au dispositif selon l'une quelconque des revendications 2 à 10.

13. Décodeur à modulation par impulsions codées de type différentiel, comprenant:

- un quantificateur-décodeur (4) recevant des échantillons codés $C_n$ obtenus par un codeur selon les revendications 11 ou 12, ce quantificateur délivrant un signal différence $\hat{d}_n$,
- un additionneur (5) à deux entrées recevant respectivement le signal $\hat{d}_n$ et un signal de prédiction $P_n$ et une sortie délivrant un échantillon $\hat{X}_n$,
- un circuit prédicteur (6) recevant $\hat{X}_n$ et délivrant le signal de prédiction $P_n$,

caractérisé en ce que le circuit prédicteur (6) est conforme au dispositif selon l'une quelconque des revendications 2 à 10.


## Patentansprüche

1. Vorrichtung für die Nachführung und die rekursive Abschätzung des Ortszustandes von Bildumrissen, die durch Linien mit N-Punkten festgelegt sind, die gemäß einer orthogonalen Musterabtaststruktur verteilt sind, wobei diese Punkte durch aufeinanderfolgende, numerische Muster festgelegt sind, wobei die Vorrichtung folgende Merkmale enthält:

- einen sequentiellen Speicher mit einem Eingang, der die Folge der numerischen Muster empfängt, und mit Ausgängen, die vorherige Muster derselben Linie und wenigstens ein Muster der vorhergehenden Linie liefern,
- eine Schaltung für die Prüfung und für die Abschätzung der Richtung des Bildumrisses, die die Veränderungen zwischen zwei Mustern vergleicht und die eine stellvertretende Größe des Umrisses berechnet,

dadurch gekennzeichnet,

A) daß der sequentielle Speicher aus drei Schaltungen (9, 10 und 11) besteht, mit einem Eingang, der die Folge der numerischen Muster empfängt, die mit $\hat{X}_n$ bezeichnet sind, wobei n der Reihe nach die ganzen Werte von 1 bis N annimmt, und mit wenigstens drei Ausgängen, die nach Empfang des Musters mit der Rangstufe $n + 1$ jeweils folgendes liefern: das Muster der Rangstufe n, das $\hat{X}_n$ sei, das Muster der Rangstufe $n - 1$, das $\hat{X}_{n-1}$ sei, zugehörig zur selben Linie wie das empfangene Muster, und das Muster mit der Rangstufe n, das der vorhergehenden Linie zugehört, das $\hat{X}_n$ sei,
B) daß die Schaltung (15) für die Prüfung folgendes aufweist:

- Mittel (21b, 22b) zum Erfassen des Vorliegens einer Veränderung des Wertes des Musters, welche eine bestimmte Schwelle übersteigt, zwischen zwei aufeinanderfolgenden Mustern $\hat{X}_{n-1}$ und $\hat{X}_n$ derselben Linie, und zum Erzeugen eines entsprechenden Signals, das »vertikales Umrißelementsignal« genannt ist und mit $EV_n$ bezeichnet ist,
- Mittel (21a, 22a) zum Erfassen des Vorliegens einer Veränderung des Wertes des Musters, welche eine bestimmte Schwelle überschreitet, zwischen zwei Mustern $\hat{X}_n$ und $\hat{X}_n$ der gleichen Rangstufe, die jedoch zu zwei aneinanderliegenden Linien gehören, und zum Erzeugen eines entsprechenden Signals, das »horizontales Umrißelementsignal« genannt ist und mit $EH_n$ bezeichnet ist,
- zwei bereits genannte, verbundene Umrißelemente, falls diese verbunden sind, wobei ein Umriß des Bildes dann durch die Gesamtmenge der verbundenen Umrißelemente festgelegt ist,
- ein Mittel (23a, 25a, 26, 23b, 25b, 27) zum Erfassen des Nichtvorliegens eines Umrißelementes am Punkt mit der Rangstufe n, wobei das Mittel ein Signal liefert, das mit $TROU_n$ bezeichnet ist,
- ein Mittel (23a, 29a, 23b, 29b) zum Zählen der gesamten Zahl von horizontalen Umrißelementen und der Zahl von vertikalen Umrißelementen, die längs der Linie für jede verbundene Zone geprüft sind, wobei die Zahlen in Signale $\overline{H}$ und $\overline{V}$ am Ende der verbundenen Zone übertragen werden,
- ein Mittel (28) zum Erfassen der verbundenen horizontalen und vertikalen Umrißelemente und zum Erfassen der Gesamtmengen dieser verbundenen Elemente längs einer Linie, wobei die Gesamtmengen als Zusammenhänge bezeichnet werden, wobei jeder Zusammenhang ein erstes Umrißelement und ein letztes Umrißelement enthält, wobei das Mittel dazu geeignet ist, ein Signal zu liefern, wenn der Zusammenhang an einem Punkt der Rangstufe n endet, wobei das Signal mit $FZC_n$ bezeichnet ist,

— eine Prüfschaltung (15), die ebenfalls drei Eingänge enthält, welche die Muster $\hat{X}_n$, $\hat{X}_{n-1}$ und $\hat{X}_n$ empfangen, und sechs Ausgänge enthält, die jeweils die Signale $EV_n$, $EH_n$, $\overline{V}$, $\overline{H}$, $FZC_n$, $TROU_n$ liefern,

C) daß ein Ring vorgesehen ist, der auf rekursive Art arbeitet, mit einer Einrichtung (16, 17, 18) zum Berechnen einer für den Umriß stellvertretenden Größe, die Umrißzustand genannt wird und mit E bezeichnet wird, wobei dieser Zustand aus einer Gesamtmenge der nachfolgend aufgeführten Zahlen besteht:

— die mittleren Zahlen (H, V) der jeweiligen horizontalen und vertikalen Umrißelemente, die auf rekursive Weise während des Folgens des Umrisses gefiltert werden,
— die Zahl (NM) der vorhergehenden Durchläufe, die im Verlauf des Folgens des Umrisses beobachtet wurden,
— die Zahl (NP) der verbundenen, vertikalen Umrißelemente, welche aber nicht mit den horizontalen Umrißelementen verbunden sind, welche bei Linien beobachtet wurden, die gegenüber der momentan behandelten Linie vorhergingen,
— die Teilsumme (NS) der beobachteten Zeichen $(\overline{S})$ während des Folgens des Umrisses, wobei deren Absolutwert ($|NS|$) und deren Zeichen (S) als Umrißzeichen bezeichnet sind,
— die Zahl Q, die die Umkehrungen des beobachteten Zeichens $\theta$ abrechnet,

wobei diese Einrichtung (16, 17, 18) dazu geeignet ist, den Zustand E' zu speichern, der für die Linie erhalten wurde, welche der geprüften Linie vorhergeht, und um als Funktion dieses Zustandes E' und der Zeichen $EH_n$, $TROU_n$, $FZC_n$, $\overline{V}$ und $\overline{H}$, die für die geprüfte Linie erhalten wurden, den neuen Zustand E des Umrisses für diese geprüfte Linie zu berechnen.

2. Vorrichtung für die Mustervorhersage für Bilder, die durch Linien mit N Punkten festgelegt sind, welche gemäß einer orthogonalen Musterabtaststruktur verteilt sind, wobei diese Punkte durch numerische Muster festgelegt sind, wobei die Vorrichtung eine Vorrichtung zum Folgen und zum Schätzen der Umrißrichtung der Bilder und eine Berechnungsschaltung für eine Vorhersage enthält, die von einer linearen Kombination von Signalen ausgehend arbeitet, die den Umrißzustand festlegen, dadurch gekennzeichnet,

A) daß die Vorrichtung zum Folgen und zum rekursiven Schätzen der Ausrichtung der Bildumrisse in Übereinstimmung mit der Vorrichtung nach Anspruch 1 ausgebildet ist, wobei:

— der sequentielle Speicher (9, 10, 11) zwei zusätzliche Ausgänge aufweist, die die Muster $\hat{X}_{n-J+1}$ und $\hat{X}_{n-J}$ liefern,
— die Prüfschaltung (15) zwei Ausgänge hat, die jeweils folgende Signale liefern:

    i) ein Signal, das mit $EV_n$ bezeichnet ist, welches das Vorliegen eines vertikalen Umrißelementes für den Punkt mit der Rangstufe n anzeigt,
    ii) das Signal $FZC_n$,

— wobei der rekursive Ring einen Ausgang besitzt, der ein Signal liefert, das mit EJ bezeichnet ist, welches den Umrißzustand an dem Punkt mit der Rangstufe $n-J$ bestimmt,

B) daß die Berechnungsschaltung für die Vorhersage eine Vorbereitungsschaltung (13) für diese Vorhersage und eine Endberechnungsschaltung für die Vorhersage enthält, wobei die Vorbereitungsschaltung (13) fünf Haupteingänge besitzt, von denen zwei Eingänge die durch den Speicher gelieferten Muster $\hat{X}_{n-J}$ und $\hat{X}_{n-J+1}$ empfangen, und von denen die anderen drei Eingänge die Signale EJ, $EV_n$ und $FZC_n$ empfangen, die durch die Schaltung (12) zum Prüfen und zum rekursiven Schätzen des Umrißzustandes geliefert werden, wobei die Schaltung (13) Mittel zum Berechnen einer linearen Kombination von Signalen $\hat{X}_{n-1}$ und $\hat{X}_{n-J+1}$, die vom Zustand EJ und von den Signalen $EV_n$ und $FZC_n$ abhängen, und einen Speicher für Direktzugriff (79) enthalten, der die genannte Kombination bei einer Adresse speichert, die von der Rangstufe $n-J$ und vom Zustand EJ abhängt, wobei dieser Speicher (79) einen Ausgang aufweist, der ein Signal $\overline{P}_{n+1}$ für das Muster des Eingangs mit der Rangstufe $n+J$ liefert, wobei die Endberechnungsschaltung (14) für die Vorhersage zwei Eingänge aufweist, von denen ein Eingang das Muster $\hat{X}_n$ des Speichers und von denen der andere Eingang das Signal $\overline{P}_{n+1}$ der Vorbereitungsschaltung (13) für die Vorhersage empfängt, wobei diese Schaltung Mittel zum Auswählen von $\overline{P}_{n+1}$ oder $\hat{X}_n$ gemäß der in $\overline{P}_{n+1}$ enthaltenen Informationen und zum Anwenden des ausgewählten Wertes, der $P_{n+1}$ sei, auf einen Ausgang enthält, wobei dieses Signal das Vorhersagemuster der Rangstufe $n+1$ darstellt.

3. Vorrichtung nach einem der Ansprüche 1 und 2, dadurch gekennzeichnet, daß der rekursive Ring der Prüf- und Schätz-Schaltung (12) folgende Merkmale aufweist:

- einen ersten Speicher (18), der als Zustandsspeicher bezeichnet wird, welcher die Signale E und $FZC_n$, die zu der der Prüfung unterworfenen Linie zugehören, und ein Signal $FZC'_n$ des Endes des Zusammenhanges für die vorhergehende Linie empfängt und ein Zustandssignal E', das der vorhergehenden Linie angehört, und ebenso das Zustandssignal EJ liefert, welches zu einem evtl. Zusammenhang am Punkt der Rangstufe $n-J$ der laufenden Linie zugehört,
- einen dritten Speicher (20), der das Signal $EV_n$ empfängt und ein Signal $EV'_n$ liefert, welches zur vorhergehenden Linie gehört,
  $FZC'_n$, das zu der vorhergehenden Linie gehört, liefert,
- einen drittren Speicher (20), der das Signal $EV_n$ empfängt und ein Signal $EV'_n$ liefert, welches zur vorhergehenden Linie gehört,
- eine Schaltung (16) für die Analyse der Zusammenhänge zwischen einer Linie und der folgenden, wobei diese Schaltung sechs Eingänge enthält, die jeweils die Signale $EH_n$, $TROU_n$ und $FZC_n$ der Schaltung (15) für die Prüfung der Zusammenhänge, und die Signale E', $FZC'_n$ und $EV'_n$ der drei Speicher empfängt, wobei die Schaltung Mittel zum Herausziehen von drei Signalen aus den sechs Signalen, die sie empfängt, besitzt, wobei diese drei Signale für eine Untersuchung des Zusammenhanges nützlich sind und zu dem Teil der vorhergehenden Linie gehören, welcher in Kontakt mit diesem Zusammenhang angeordnet ist, wobei diese drei Signale jeweils folgende Signale sind:

  - ein Signal $\bar{S}$, das das Vorzeichen der Orientierung des Bildumrisses anzeigt, dergestalt, daß dieser zur laufenden Linie hin beobachtet wird,
  - ein Signal TI, das die Notwendigkeit einer Initialisierung des Zustandes am Beginn des Umrisses anzeigt,
  - ein Signal $\tilde{E}$, das zu einem vorhergehenden, gleichwertigen Zustand für den Zusammenhang im Verlauf der Prüfung in dem Fall der Beobachtung einer Gabelung gehört, d. h. bei einer Situation, in der zwei verschiedene Zusammenhänge der vorhergehenden Linie beide zu dem gleichen Zusammenhang der einer Prüfung unterworfenen Linie gehören,

- eine Schaltung (17) zum Wiederauffrischen des Zustandes mit fünf Eingängen, die jeweils die Signale $\bar{H}$ und $\bar{V}$ der Prüfschaltung (15) für die Zusammenhänge und die Signale $\bar{S}$, TI und $\tilde{E}$ der Analyseschaltung (18) für die Zusammenhänge zwischen einer Linie und der folgenden empfängt, und mit einem Ausgang, der ein Zustandssignal E liefert, das entweder ausgehend von dem früheren Zustand $\tilde{E}$ und von den kürzer zurückliegenden Beobachtungen $\bar{S}$, $\bar{H}$, $\bar{V}$, oder alleine ausgehend von den kürzer zurückliegenden Beobachtungen $\bar{S}$, $\bar{H}$, $\bar{V}$, falls diese durch das Signal TI angezeigt ist, erhalten wird.

4. Vorrichtung nach Anspruch 2, dadurch gekennzeichnet, daß die Prüfschaltung (15) für die verbundenen Zonen folgende Merkmale aufweist:

A) einen ersten Kanal zur Behandlung von horizontalen Umrißelementen, mit folgenden Merkmalen:

  - einer ersten Differentiationsschaltung (21a) mit zwei Eingängen, die die Signale $\hat{X}'_n$ und $\hat{X}_n$ empfangen, und mit einem Ausgang, der ein vertikales Gradientensignal $GV_r$ liefert,
  - einem ersten Vergleicher (22a), der das Signal $GV_n$ empfängt und das logische Signal $EH_n$ liefert, das ein horizontales Umrißelement darstellt,
  - einem Ausgang, der dieses Signal $EH_n$ liefert,
  - einem ersten Akkumulator (23a), der die Signale $EH_n$ empfängt und der diese abrechnet, um ein Signal $\bar{H}_n$ zu liefern, daß die Anzahl der vertikalen Umrißelemente darstellt, wobei der Akkumulator durch das Signal $TROU_n$ auf 0 zurückgesetzt wird,
  - einem zweiten Vergleicher (25a), der das Signal $\bar{H}_n$ empfängt und dieses mit einer vorbestimmten Zahl vergleicht und ein Überschreitungssignal $DH_n$ liefert, wenn $\bar{H}_n$ diese Zahl übersteigt,
  - einem ersten Register (29a), das das Signal $\bar{H}_n$ speichert, wobei das Register durch das Signal $FZC_n$ gesteuert wird und das Signal $\bar{H}$ die Anzahl der horizontalen Umrißelemente der geprüften, verbundenen Zone liefert,
  - einem Inverter (26), der $EH_n$ empfängt und ein komplementäres Signal $\overline{EH}_n$ liefert,

B) einen zweiten Kanal zur Behandlung von vertikalen Umrißelementen mit folgenden Merkmalen:

  - einer zweiten Differentiationsschaltung (21b) mit zwei Eingängen, die die Signale $\hat{X}_n$ und $X_{n-1}$ empfangen und mit einem Ausgang, der ein horizontales Gradientensignal $GH_n$ liefert,
  - einem ersten Vergleicher (22b), der das Signal $GH_n$ empfängt und der das logische Signal $EV_n$ liefert, das ein vertikales Umrißelement darstellt,
  - einem Ausgang, der dieses Signal $EV_n$ liefert,

28

- einem zweiten Akkumulator (23b), der diese Signale $EV_n$ empfängt und sie abrechnet, um das Signal $\overline{V}_n$ zu liefern, das die Zahl der horizontalen Umrißelemente darstellt, wobei dieser Akkumulator durch das Signal $TROU_n$ auf Null zurückgesetzt wird,
- einem zweiten Vergleicher (25b), der das Signal $\overline{V}_n$ empfängt und dieses mit einer vorbestimmten Zahl vergleicht und ein Überschreitungssignal $DV_n$ liefert, wenn $\overline{V}_n$ diese Zahl übersteigt,
- einem zweiten Regler (29b), das das Signal $\overline{V}_n$ lädt, wobei dieses Register durch das Signal $FZC_n$ gesteuert wird und das Signal $\overline{V}$ die Anzahl der vertikalen Umrißelemente der geprüften, verbundenen Zone liefert,
- einem Vergleicher (24), der das Signal $\overline{V}_n$ empfängt und dieses Signal mit 1 vergleicht und ein Signal $DZV_n$ liefert,

C) ein logisches Tor des Typs ODER mit drei Eingängen, die jeweils die Signale $DH_n$, $\overline{EH}_n$ und $DV_n$ empfangen und mit einem Ausgang, der das Signal $TROU_n$ liefert,

D) ein logisches Tor des Typs UND mit zwei Eingängen, die die Signale $TROU_n$ und $DZV_n$ empfangen, und mit einem Ausgang, der das Signal $FZC_n$ liefert.

5. Vorrichtung nach Anspruch 3, dadurch gekennzeichnet, daß die Schaltung (16) für die Analyse der verbundenen Zonen einer Linie mit einer folgenden Linie folgende Merkmale enthält:

- eine erste Verzögerungsschaltung (30a) mit einem Eingang, der das Signal $TROU_n$ empfängt, und mit einem Ausgang, der das verzögerte Signal $TROU_{n-1}$ liefert,
- ein Register (31) mit zwei Eingängen, von denen der eine ein Signaleingang und der andere ein Schreiberlaubniseingang ist, die jeweils die Signale $TROU_{n-1}$ und $EV'_n$ empfangen, und mit einem Ausgang der das Signal $\overline{S}$ liefert,
- eine zweite Verzögerungsschaltung (30b) mit einem Eingang, der das Signal $EH_n$ empfängt, und mit einem Ausgang, der ein Signal $EH_{n-1}$ liefert,
- ein logisches Tor (32) des Typs ODER mit zwei Eingängen, die die Signale $EH_{n-1}$ und $EH_n$ empfangen, und mit einem Ausgang, der das Signal $EHH_n$ liefert,
- ein logisches Tor (33) des Typs UND mit zwei Eingängen, die die Signale $EHH_n$ und $EV'_n$ empfangen und mit einem Ausgang, der ein Signal $EVZ_n$ liefert,
- einen ersten Kanal zum Behandeln des Signals $EVZ_n$ mit folgenden Merkmalen:

    i) einem ersten Akkumulator (34a), der einen Eingang zum Rücksetzen auf Null aufweist, der das Signal $TROU_n$ empfängt, der einen Signaleingang hat, welcher $EVC_n$ empfängt, und einen Ausgang aufweist, der ein Signal $EVC_n$ liefert,

    ii) einem ersten Vergleicher (35a) bezüglich 1 mit einem Eingang, der $EVC_n$ empfängt und mit einem Ausgang, der ein Signal $TI_n$ liefert,

    iii) einem Register (36), das einen Schreibeingang aufweist, der das Signal $FZC_n$ empfängt und einen Signaleingang besitzt, der das Signal $TI_n$ empfängt und einen Ausgang aufweist, der ein Signal $TI$ für die Notwendigkeit einer Initialisierung liefert,

- einen zweiten Kanal zur Behandlung des Signals $EVZ_n$ mit folgenden Merkmalen:

    i) einem zweiten Akkumulator (34b) mit einem Eingang zum Rücksetzen auf Null, der das Signal $FZC'_n$ empfängt und mit einem Signaleingang, der das Signal $EVZ_n$ empfängt, und mit einem Ausgang, der ein Signal $AEVZ_n$ liefert,

    ii) einem zweiten Vergleicher (35b) bezüglich 1 mit einem Eingang, der das Signal $AEVZ_n$ empfängt, und mit einem Ausgang, der ein Signal $DEVZ_n$ liefert,

    iii) einem Akkumulator (37) mit einem Eingang zum Rücksetzen auf Null, der das Signal $TROU_n$ empfängt, mit einem Takterlaubniseingang, der das Signal $DEVZ_n$ empfängt, mit einem Eingang, der das Signal 1 empfängt und mit einem Ausgang, der ein Signal $FCH_n$ liefert,

    iiii) einem Vergleicher (38) bezüglich 1 mit einem Eingang, der das Signal $FCH_n$ empfängt und mit einem Ausgang, der ein Befehlssignal PREM liefert,

- eine Verzögerungsschaltung (39) mit einem Takterlaubniseingang HP, der das Signal $FZC'_n$ empfängt, mit einem Signaleingang, der das Zustandssignal $E'$ empfängt, und mit einem Ausgang, der ein Zustandssignal $E'_1$ liefert,
- eine arithmetische und logische Schaltung (40) mit zwei Eingängen, von denen ein Eingang das Signal $E'_1$ empfängt und von denen der andere das Signal $E'$ empfängt, und mit einem Ausgang, der ein Gleichgewichtssignal $B'$ für die Signale $E'_1$ und $E'$ liefert,
- und letztlich eine Auswahlschaltung (41) mit einem Befehlseingang, der das Signal PREM empfängt, mit zwei Eingängen, die die Signale $B'$ und $E'$ empfangen, und mit einem Ausgang, der das Zustandssignal $\tilde{E}$, das dem Vorliegen einer Gabelung entspricht, liefert.

6. Vorrichtung nach Anspruch 5, dadurch gekennzeichnet, daß die arithmetische und logische Schaltung (40) folgende Merkmale aufweist:

— zwei Additionsschaltungen (42a und 42b) mit zwei Eingängen, die jeweils Signale $NP'_1$ und $NM'_1$ empfangen, die bestimmte binäre Elemente des Zustandssignals $E'_1$ und der aus dem Zustandssignal $E'$ herausgezogenen Signale $NP'$ und $NM'$ umschichten, und mit einem Ausgang, der jeweils die Signale $NL'_1 = NM'_1 + NP'_1$ und $NL' = NM' + NP'$ liefert,

— eine Code-Umsetzerschaltung (43) mit zwei Eingängen, die die Signale $NL'_1$ und $NL'$ empfangen, und mit einem Ausgang, der einen Gleichgewichtskoeffizienten $a$ liefert, der dazu dient, die relative Länge der beiden Umrisse zu berücksichtigen,

— eine arithmetische und logische Schaltung (34) mit drei Eingängen, die $a$, $E'$ und $E'_1$ empfangen, und mit einem Ausgang, der das Signal $B'$ liefert.

7. Vorrichtung nach Anspruch 3, dadurch gekennzeichnet, daß die Schaltung (17) zum Wiederauffrischen des örtlichen Zustandes folgende Merkmale aufweist:

— einen ersten Codeumsetzer (45a) mit zwei Eingängen, die die horizontalen und vertikalen Umrißelementsignale $\tilde{H}$ und $\tilde{V}$ empfangen, die aus dem Zustandssignal $\tilde{E}$ herausgezogen sind, und mit einem Ausgang, der ein Signal $\tilde{\theta}$ liefert, das dem Absolutwert des vorherigen Ausrichtungswinkels des Umrisses entspricht,

— einen zweiten Codeumsetzer (45b) mit zwei Eingängen, die die horizontalen und vertikalen Umrißelementsignale $\tilde{H}$ und $\tilde{V}$ empfangen, die von der Schaltung (15) erzeugt werden, und mit einem Ausgang, der ein Signal $\bar{\theta}$ liefert, das dem Absolutwert des Ausrichtungswinkels des geprüften Umrisses entspricht,

— eine Schwellen-Differentiationsschaltung (46) mit zwei Eingängen, die die Signale $\tilde{\theta}$ und $\bar{\theta}$ empfangen, und mit einem Ausgang, der ein Signal $T\theta$ liefert,

— eine Vergleicherschaltung (47) bezüglich 2 mit einem Eingang, der ein Signal $N\tilde{M}$ empfängt, das aus dem Zustandssignal $\tilde{E}$ herausgezogen ist und das die Zahl der Umrißdurchläufe darstellt, und mit einem Eingang, der ein Signal $TNM$ liefert,

— ein logisches Tor (50) vom Typ UND mit zwei Eingängen, die jeweils die Signale $T\theta$ und $TNM$ empfangen, und mit einem Ausgang, der ein Signal $RUPT\theta$ liefert,

— eine logische Schaltung (48) vom Typ Exklusiv-ODER mit zwei Eingängen, die jeweils das Signal $\tilde{S}$, das aus dem Zustandssignal $\tilde{E}$ herausgezogen ist, und das Signal $\bar{S}$, das aus der Schaltung 16 herausgenommen ist, empfangen, und mit einem Ausgang, der ein Signal $SS$ liefert,

— eine Kombinationsschaltung (49) mit zwei Eingängen, die jeweils ein Signal $\tilde{Q}$, das aus dem Signal $\tilde{E}$ herausgezogen ist, und das Signal $SS$ empfangen, und mit zwei Ausgängen, von denen einer ein Signal $RUPTS$ und der andere ein Signal $Q$ liefert,

— eine logische Schaltung (51) vom Typ ODER mit drei Eingängen, die jeweils das Signal $TI$, das Signal $RUPT\theta$ und das Signal $RUPTS$ empfangen, und mit einem Ausgang, der ein Signal $RUPT$ liefert,

— eine arithmetische und logische Schaltung (52) zum Wiederauffrischen des Zustandes mit neun Eingängen, die jeweils das Signal $Q$ und folgende, von $\tilde{E}$ herrührende Signale empfangen: $N\tilde{M}$, $N\tilde{S}$, $\tilde{H}$, $\tilde{V}$, $NP$ sowie die Beobachtungssignale $\bar{H}$, $\bar{V}$ und $\bar{S}$, und mit einem Ausgang, der das Wiederauffrischungssignal $EE$ liefert,

— einen Codeumwandler (53) mit drei Eingängen, die jeweils die Signale $\bar{H}$, $\bar{V}$ und $\bar{S}$ empfangen, und mit einem Ausgang, der ein initialisiertes Zustandssignal $EI$ liefert,

— eine Auswahlschaltung (54) mit zwei Eingängen, die die Signale $EE$ und $EI$ empfangen, mit einem Befehlseingang, der das Signal $RUPT$ empfängt, und mit einem Ausgang, der das Signal $E$ liefert.

8. Vorrichtung nach Anspruch 3, dadurch gekennzeichnet, daß der Zustandsspeicher (18) folgende Merkmale hat:

— eine Akkumulatorschaltung (56a) mit einem Eingang, der das Signal $FZC_n$ empfängt, wobei dieser Akkumulator durch das Dienstsignal HP betätigt wird und durch DL auf Null rückgesetzt wird, und mit einem Ausgang, der das Signal AE liefert,

— eine Akkumulatorschaltung (57a) mit einem Eingang, der das Signal $FZC_n$ empfängt und der durch das Signal PL betätigt wird, und mit zwei Ausgängen, die die Signale $OE_1$ und $OE_2$ liefern,

— eine Speicherschaltung (59) mit einem Eingang, der das Signal $FZC_n$ empfängt, betätigt durch HP, und mit einem Ausgang, der das Signal $FZC_{n-J}$ liefert,

— eine ODER-Schaltung (58a) mit zwei Eingängen, die die Signale $FZC_{n-J}$ und DL empfangen, und mit einem Ausgang, der ein Signal DLJ liefert,

— einen Akkumulator (56b) mit zwei Eingängen, die die Signale $FZC_{n-J}$ und DL empfangen, betätigt durch HP, und mit einem Ausgang, der ein Signal ALJ liefert,

— eine ODER-Schaltung (58b) mit zwei Eingängen, die ein Signal $FZC'_n$ und ein Signal DL empfangen, betätigt durch HP, und mit einem Ausgang, der ein Signal OL' liefert,

— eine Weichenstellerschaltung (57b) mit zwei Eingängen, die die Signale OLJ und OL' empfangen, und mit zwei Ausgängen, die die Signale $OL_1$ und $OL_2$ liefern, wobei dieser Weichensteller durch PL betätigt wird,

— eine Weichenstellerschaltung (57c) mit zwei Eingängen, die die Signale ALJ und AL' empfangen, betätigt durch PL, und mit zwei Ausgängen, die die Signale $AL_1$ und $AL_2$ liefern,

— einen ersten Direktzugriffspeicher (55a), betätigt durch HP mit fünf Eingängen, die die Signale AE, E, $OE_1$, $AL_1$ und $OL_1$ empfangen, und mit einem Ausgang, der ein Signal $e_1'$ liefert,

— einen zweiten Direktzugriffspeicher (55b), betätigt durch HP, mit fünf Eingängen, die die Signale AE, E, $OE_2$, $AL_2$ und $OL_2$ empfangen, und mit einem Ausgang, der ein Signal $e_2'$ liefert,

— eine Weichenstellerschaltung (60), betätigt durch PL, mit zwei Eingängen, die die Signale $e_1'$ und $e_2'$ empfangen, und mit zwei Ausgängen, die die Signale E' und EJ liefern.

9. Vorrichtung nach Anspruch 2, dadurch gekennzeichnet, daß die Schaltung (13) zur Vorbereitung und Speicherung der Vorhersage folgende Merkmale aufweist:

— einen ersten Speicher (61) mit einem Eingang, der das Signal $EV_n$ empfängt, und mit einem Ausgang, der ein verzögertes Signal $EV_{n-J}$ liefert,

— eine Inverterschaltung (63) mit einem Eingang, der $EV_{n-J}$ empfängt und ein komplementäres Signal $\overline{EV}_{n-J}$ liefert,

— einen zweiten Speicher (62) mit einem Eingang, der das Signal $FZC_n$ empfängt, und mit einem Ausgang, der ein verzögertes Signal $FZC_{n-J-1}$ liefert,

— ein logisches Tor (64) des UND-Typs mit zwei Eingängen, die jeweils die Signale $\overline{EV}_{n-J}$ und $FZC_{n-J-1}$ empfangen, und mit einem Ausgang, der $DT_{n-J}$ liefert,

— eine Kippschaltung (65) mit zwei Eingängen, die jeweils die Signale $EV_{n-J}$ und $DT_{n-J}$ empfangen, und mit einem Ausgang, der ein Signal $ZC_{n-J}$ liefert,

— ein logisches Tor (66) vom ODER-Typ mit zwei Eingängen, von denen einer das Taktsignal HP empfängt und von denen der andere das Signal $ZC_{n-J}$ empfängt, und mit einem Ausgang, der ein Signal OE liefert,

— eine Weichenstellerschaltung (67) mit zwei Eingängen, von denen der eine das Taktsignal HP und der andere das Signal OE empfängt, mit einem Befehlseingang, der das Signal PL empfängt, und mit zwei Ausgängen, die jeweils ein Signal $OEPP_1$ und ein Signal $OEPP_2$ liefern,

— eine Weichenstellerschaltung (68) mit zwei Eingängen, die jeweils das Taktsignal und ein Signal 0 vom Werte Null empfangen, mit einem Befehlseingang, der das Dienstsignal PL empfängt, und mit zwei Ausgängen, die jeweils die Signale $OLPP_1$ und $OLPP_2$ liefern,

— eine Codeumwandlerschaltung (73) mit zwei Eingängen, die jeweils die Signale HJ und VJ, die aus dem Zustandssignal EJ herausgezogen sind, empfangen und mit zwei Ausgängen, die jeweils ein Signal $\gamma$J und ein Signal NDECAJ liefern,

— einen Vergleicher (75) bezüglich einer speziellen Zahl, mit einem Eingang, der das Signal NDECAJ empfängt, und mit einem Ausgang, der das Signal TDECA liefert,

— einen Zähler (77) mit einem Eingang zum Rücksetzen auf Null, der das Dienstsignal DL empfängt, und mit einem Eingang, der das Taktsignal HP empfängt, und mit einem Ausgang, der ein Signal n liefert,

— eine arithmetische Schaltung (76) mit zwei Eingängen, die jeweils die Signale NDECAJ und n empfangen, und mit einem Ausgang, der das Signal AEP liefert, das $n - J + NDECAJ$ entspricht,

— einen Addierer (78) mit zwei Eingängen, von denen einer die Zahl n und der andere die Zahl 1 empfängt, und mit einem Ausgang, der das Signal ALPP liefert, das $n + 1$ entspricht,

— einen ersten Weichensteller (69a) mit zwei Eingängen, die jeweils das Signal $PP_{n-J}$ und ein Signal 0 Null empfangen, und mit einem Befehlseingang, der das Dienstsignal PL empfängt, und mit zwei Ausgängen, die jeweils die Signale $pp_1$ und $pp_2$ liefern,

— einen zweiten Weichensteller (69b) mit zwei Eingängen, die jeweils die Signale ALPP und AEP empfangen, und mit einem Befehlseingang, der das Dienstsignal PL empfängt, und mit zwei Ausgängen, die jeweils die Signale $AEPP_1$ und $AEPP_2$ liefern,

— einen ersten Direktzugriffsspeicher (70) mit fünf Eingängen, die jeweils die Signale $OEPP_1$, $OLPP_1$, $AEPP_1$, ALPP und $pp_1$ empfangen, und mit einem Ausgang, der ein Signal $pp_1$ liefert,

— einen zweiten RAM-Direktzugriffsspeicher (71) mit fünf Eingängen, die jeweils die Signale $OEPP_2$, $OLPP_2$, $AEPP_2$, ALPP und $pp_2$ empfangen, und mit einem Ausgang, der ein Signal $p_2$ liefert,

— eine Auswahlschaltung (79) mit zwei Eingängen, die jeweils die Signale $p_1$ und $p_2$ empfangen, und mit einem Befehlseingang, der das Dienstsignal PL empfängt, und mit einem Ausgang, der ein vorbereitetes Vorhersagesignal $\overline{P}_{n+1}$ liefert.

10. Vorrichtung nach Anspruch 2, dadurch gekennzeichnet, daß die Endberechnungsschaltung (14) für die Vorhersage folgende Merkmale aufweist:

— eine Decoderschaltung (80) mit einem Eingang, der das Signal $\overline{P}_{n+1}$ empfängt, wobei die Schaltung ermittelt, ob $\overline{P}_{n+1}$ Null ist, und mit einem Ausgang, der ein Signal COM liefert,

— eine Auswahlschaltung (81) mit zwei Eingängen, die jeweils die Signale $\overline{P}_{n+1}$ und $\hat{X}_n$ empfangen, mit einem Befehlseingang, der das Signal COM empfängt, und mit einem Ausgang, der das Signal $P_{n+1}$ liefert.

31

**0 021 948**

11. Codierer zum Modulieren durch codierte Impulse des Differential-Typs mit folgenden Merkmalen:

- einem Subtrahierer (1) mit zwei Eingängen, von denen einer ein numerisches Muster $X_n$ empfängt und von denen der andere ein numerisches Vorhersagesignal $P_n$ empfängt, und mit einem Ausgang, der ein Differenzsignal $d_n$ liefert,
- einem Quantisierungs-Codierer (2), der das Signal $d_n$ empfängt und ein codiertes Signal $C_n$ liefert,
- einem Quantisierungs-Decodierer (4), der das Signal $C_n$ empfängt und ein Wiederherstellungsdifferenzsignal $\hat{d}_n$ liefert,
- einem Addierer (5) mit zwei Eingängen, die jweils das Signal $\hat{d}_n$ und ein Vorhersagesignal $P_n$ empfangen, und mit einem Ausgang, der ein Muster $\hat{X}_n$ liefert,
- eine Vorhersageschaltung (6), die $\hat{X}_n$ empfängt und das Vorhersagemuster $P_n$ liefert,

dadurch gekennzeichnet, daß die Vorhersageschaltung (6) mit einer Vorrichtung nach einem der Ansprüche 2 bis 10 übereinstimmt.

12. Codierer zum Modulieren durch codierte Impulse des Differential-Typs mit folgenden Merkmalen:

- einem Subtrahierer (1) mit zwei Eingängen, von denen einer ein numerisches Muster $X_n$ empfängt und von denen der andere ein numerisches Vorhersagesignal $P_n$ empfängt, und mit einem Ausgang, der ein Differenzsignal $d_n$ liefert,
- einem Quantisierungscodierer (2), der das Signal $d_n$ empfängt und ein codiertes Signal $C_n$ liefert,
- einem Quantisierer (7), der das Signal $d_n$ empfängt, und ein wiederhergestelltes Differenzsignal $\hat{d}_n$ liefert,
- einem Addierer (5) mit zwei Eingängen, die jeweils das Signal $\hat{d}_n$ und ein Vorhersagesignal $P_n$ empfangen, und mit einem Ausgang, der ein Muster $\hat{X}_n$ liefert,
- einer Vorhersageschaltung (6), die $\hat{X}_n$ empfängt und das Vorhersagemuster $P_n$ liefert,

dadurch gekennzeichnet, daß die Vorhersageschaltung (6) mit einer Vorrichtung nach einem der Ansprüche 2 bis 10 übereinstimmt.

13. Decodierer für die Modulation durch codierte Impulse vom Differential-Typ mit folgenden Merkmalen:

- einem Quantisierungs-Decodierer (4), der die codierten Muster $C_n$ empfängt, die durch einen Codierer nach Anspruch 11 oder 12 erhalten werden, wobei dieser Quantisierer ein Differenzsignal $\hat{d}_n$ liefert,
- einem Addierer (5) mit zwei Eingängen, die jeweils das Signal $\hat{d}_n$ und ein Vorhersagesignal $P_n$ empfangen, und mit einem Ausgang, der ein Muster $\hat{X}_n$ liefert,
- einer Vorhersageschaltung (6), die $\hat{X}_n$ empfängt, und das Vorhersagesignal $P_n$ liefert,

dadurch gekennzeichnet, daß die Vorhersageschaltung (6) mit einer Vorrichtung nach einem der Ansprüche 2 bis 10 übereinstimmt.

## Claims

1. Apparatus for following and recursively estimating the local state of image contours defined by lines of N points distributed in a structure to be sampled orthogonally, said points being defined by successive digital samples, said apparatus comprising:

- a sequential memory having an input which receives the sequence of digital samples and outputs delivering the preceding samples from the same line and at least one sample from the preceding line,
- a circuit for examining and estimating the direction of the image contour which compares variations between two samples and which calculates a representative magnitude of the contour,

characterized in that

A) the sequential memory comprises three circuits (9), (10) and (11) having one input receiving the sequence of digital samples designated $\hat{X}_n$, where n has successively integral values from 1 to N, and at least three outputs respectively delivering, when the sample from rank $n+1$ is received at the input, the sample from rank n, designated $\hat{X}_n$, the sample from rank $n-1$ of the same line as the received sample, designated $\hat{X}_{n-1}$, and the sample from rank n of the preceding line, designated $\hat{X}_n^-$,

B) the examination circuit (15) comprises:

— means (21b, 22b) for detecting between two successive samples from the same line $\hat{X}_{n-1}$ an $\hat{X}_n$, the presence of a variation in the sample value which exceeds a certain threshold value, and for generating a corresponding signal referred to as the »vertical contour element« and designated $EV_n$,

— means (21a, 22a) for detecting between two samples $\hat{X}_n$ and $\hat{X}_n^-$ from the same rank but belonging to successive lines, the presence of a variation in the sample value which exceeds a certain threshold value, and for generating a corresponding signal referred to as the »horizontal contour element« and designated $EH_n$,

— two contour elements being termed linked if they are connected, an image contour being thereby defined by an assembly of linked contour elements,

— means (23a, 25a, 26, 23b, 25b, 27) for detecting the absence of a contour element at the point in rank n, said means delivering a signal designated $TROU_n$,

— means (23a, 29a, 23b, 29b) for counting the total number of horizontal contour elements and vertical contour elements examined in the length of one line for each linked zone, which numbers are translated into signals $\overline{H}$ and $\overline{V}$, at the end of the linked zone,

— means (28) for detecting linked horizontal and vertical contour elements, and for detecting assemblies of such linked elements, in the length of a line, said assemblies being designated ›connections‹, each connection being comprised between a first contour element and a last contour element, said means being adapted to deliver a signal, designated $FZC_n$, when a connection ends at a point in the rank n,

— the examination circuit (15) thereby has three inputs receiving samples $\hat{X}_n$, $\hat{X}_{n-1}$ and $\hat{X}_n^-$ and six outputs respectively delivering signals $EV_n$, $EH_n$, $\overline{V}$, $\overline{H}$, $FZC_n$ and $TROU_n$.

C) a recursively-functioning loop, comprising means (16, 17, 18) for calculating a representative magnitude of the contour, termed contour state and designated E, said state being constituted by an assembly of numbers which are:

— respective average numbers (H, V) of horizontal and vertical contour elements, recursively sampled in the course of following a contour,

— the number (NM) of preceding steps observed during the course of following a contour,

— the number (NP) of linked vertical contour elements, but not linked to horizontal contour elements, observed in lines preceding the line under examination,

— the partial sums (NS) of sign ($\overline{S}$) observed in the course of following a contour, its absolute value ($|NS|$) and its sign (s) termed contour sign,

— the number Q which summarizes the inversion of observed $\theta$,

said means (16, 17, 18) being adapted to memorize the state E' for the line preceding that under examination and to calculate, as a function of the said state E' and the signals $EH_n$, $TROU_n$, $FZC_n$, $\overline{V}$ and $\overline{H}$ obtained for the linie under examination, the new contour state E for the line under examination.

2. Apparatus for predicting samples for images defined by lines of N points distributed in a structure to be sampled orthogonally, said points being defined by digital information, said apparatus comprising an apparatus for following and estimating the direction of image contours and a circuit for calculating a prediction working on the basis of a linear combination of signals defining the contour state, characterized in that:

A) the apparatus for following and recursively estimating the orientation of image contours conforms to the apparatus of claim 1 in which:

— the sequential memory (9, 10, 11) has two supplementary outputs delivering samples $\hat{X}_{n-J+1}$ and $\hat{X}_{n-J}$,

— examination circuit (15) has two outputs respectively delivering:

i) a signal $EV_n$ indicating the presence of a vertical contour element for the point in rank n,
ii) the signal $FZC_n$,

— the recursive loop having one output delivering a signal EJ determining the contour state of a point in rank $n-J$,

B) the prediction calculation circuit comprises a preparation circuit (13) for said prediction and a final calculation circuit for the prediction, the preparation circuit (13) having five principal inputs, two of which receive the samples $\hat{X}_{n-J}$ and $\hat{X}_{n-J+1}$ delivered by the memory, the other three receiving the signals EJ, $EV_n$ and $FZC_n$ delivered by the circuit (12) for examination and recursive estimation of the contour state, said circuit (13) comprising means for calculating a linear combination of signals $\hat{X}_{n-J}$ and $\hat{X}_{n-J+1}$ which depends on state EJ and signals $EV_n$ and $FZC_n$, and a direct access memory

**0 021 948**

(79) which stores the said combination at an address depending on rank $n-J$ and the state EJ, said memory (79) having an output which delivers a signal $\bar{P}_{n+1}$ for the sample signal for entry of rank $n+1$, the circuit (14) for final calculation of the prediction having two inputs, one receiving sample $\hat{X}_n$ from the memory and the other the signal $\bar{P}_{n+1}$ from prediction preparation circuit (13), said circuit comprising means for selecting $\bar{P}_{n+1}$ or $\hat{X}_n$ according to information contained in $\bar{P}_{n+1}$ and to supply the selected value, termed $P_{n+1}$, to an output, said signal constituting the predictive sample for rank $n+1$.

3. Apparatus according to either of claims 1 and 2 characterized in that the recursive loop of the examination and estimation circuit (12) comprises:

—  a first memory, termed state memory, receiving signals E and $FZC_n$ in respect of a line under examination, and a signal $FZC_n'$ of an end of a connection for a preceding line and delivering a state signal E' in respect of the preceding line as well as the state signal EJ in respect of any connection to the point of rank $n-J$ of the current line,
—  a second memory (19) with N registers which receives signal $FZC_n$ for an end of a connection in respect of the line under examination and delivers signal $FZC_n'$ in respect of the preceding line,
—  a third memory (20) receiving signal $EV_n$ and delivering signal $EV_n'$ in respect of the preceding line,
—  a circuit (16) for examining connections from one line to the following, said circuit having six inputs receiving respectively signals $EH_n$, $TROU_n$ and $FZC_n$ from connection examination circuit (15), and E', $FZC_n'$ and $EV_n'$ from the three memories, said circuit having means for extracting, from the six signals it receives, three signals utilized in the study of a connection and relating to that part of the preceding line situated in contact with the said connection, said three signals respectively being:

—  a signal $\bar{S}$ giving the sign of orientation of the image contour as observed in the current line,
—  a signal Tl indicating the need to reset the state at the start of a contour,
—  a signal $\tilde{E}$ relating to a former equivalent state for the connection under examination when a fork is observed, that is where two different connections from the preceding line are both joined to the same connection of the line under examination,
—  a state-reactualization circuit (17), with five inputs respectively receiving signals $\bar{H}$ and $\bar{V}$ from connection examination circuit (15) ans $\bar{S}$, Tl and $\tilde{E}$ from circuit (16) for analyzing connections from one line to the following, and one output delivering a state signal E obtained either from the former state $\tilde{E}$ and more recent observations $\bar{S}$, $\bar{H}$ and $\bar{V}$, or uniquely from the most recent observations $\bar{S}$, $\bar{H}$ and $\bar{V}$ in the case indicated by signal Tl.

4. Apparatus according to claim 2 characterized in that the circuit (15) for examination of connected zones comprises:

A)  a first channel for treatment of horizontal contour elements comprising:

—  a first differentiation circuit (21a) having two inputs receiving signals $\hat{X}_n'$ and $\hat{X}_n$, and an output delivering a vertical gradient signal $GV_n$,
—  a first comparator (22a) receiving signal $GV_n$ and delivering logic signal $EH_n$ representing a horizontal contour element,
—  an output delivering said signal $EH_n$,
—  a first accumulator (23a) receiving signals $EH_n$ and counting them, to deliver signal $\bar{H}_n$ representing the number of vertical contour elements, said accumulator being reset to zero by the signal $TROU_n$,
—  a first comparator (25a) receiving signal $\bar{H}_n$, comparing it with a predetermined number, and delivering excess signal $DH_n$, when $\bar{H}_n$ exceeds this number,
—  a first register (29a) loaded by signal $\bar{H}_n$, said register being commanded by signal $FZC_n$ and delivering signal $\bar{H}$, representing the number of horizontal contour elements of the connected zone under examination,
—  an inverter (26) receiving $EH_n$ and delivering complementary signal $\overline{EH_n}$,

B)  a second channel for treatment of vertical contour elements comprising:

—  a second differentiation circuit (21b) having two inputs receiving signals $\hat{X}_n$ and $\hat{X}_{n-1}$, and an output delivering horizontal gradient signal $GH_n$,
—  a second comparator (22b) receiving signal $GH_n$ and delivering logic signal $EV_n$ representing a vertical contour element,
—  an output delivering said signal $EV_n$,
—  a second accumulator (23b) receiving signals $EV_n$, and counting them, to deliver signal $\bar{V}_n$ representing the number of horizontal contour elements, said accumulator being reset to zero by the signal $TROU_n$,

34

- a second comparator (25b) receiving signal $\overline{V}_n$, comparing it with a predetermined number, and delivering excess signal $DV_n$ when $\overline{V}_n$ exceeds this number,
- a second register (29b) loaded by signal $\overline{V}_n$, said register being commanded by signal $FZC_n$, and delivering signal $\overline{V}$, representing the number of vertical contour elements of the connected zone under examination,
- a comparator (24) receiving signal $\overline{V}_n$ comparing said signal to 1, and delivering signal $DZV_n$,

C) an OR gate with three inputs receiving respectively signals $DH_n$, $\overline{EH}_n$ and $DV_n$ and an output delivering signal $TROU_n$,

D) an AND gate with two inputs receiving signals $TROU_n$ and $DZV_n$ and an output delivering signal $FZC_n$.

5. Apparatus according to claim 3 characterized in that circuit (16) for analysis of connected zones between one line and the next comprises:

- a first delay circuit (30a) with an input receiving signal $TROU_n$ and an output delivering delayed signal $TROU_{n-1}$,
- a register (31) with two inputs, one for a signal, the other for authorizing writing, respectively receiving signals $TROU_{n-1}$ and $EV'_n$ and an output delivering signal $\overline{S}$,
- a second delay circuit (30b) with one input receiving signal $EH_n$ and one output delivering signal $EH_{n-1}$,
- an OR gate (32) with two inputs receiving singals $EH_{n-1}$ and $EH_n$ and an output delivering signal $EHH_n$,
- an AND gate (33) with two inputs receiving signals $EHH_n$ and $EV'_n$ and an output delivering signal $EVZ_n$,
- a first treatment channel for signal $EVZ_n$ comprising:

  i) a first accumulator (34a) having an input for resetting to zero receiving signal $TROU_n$, a signal input receiving $EVZ_n$ and an output delivering signal $EVC_n$,
  ii) a first comparator (35a) for comparing with 1, having an input receiving $EVC_n$ and an output delivering signal $TI_n$,
  iii) a register (36) having a writing input receiving signal $FZC_n$, a signal input receiving $TI_n$ and an output delivering signal $TI$ necessitating reinitialization,

- a second treatment channel for signal $EVZ_n$ comprising:

  i) a second accumulator (34b) having an input for resetting to zero receiving signal $FZC'_n$, a signal input receiving $EVZ_n$ and an output delivering signal $AEVZ_n$,
  ii) a second comparator (35b) for comparing with 1, having an input receiving $AEVZ_n$ and an output delivering signal $DEVZ_n$,
  iii) an accumulator (37) having an input for resetting to zero receiving signal $TROU_n$, a clock authorization input receiving signal 1, and an output delivering signal $FCH_n$,
  iv) a comparator (38) for comparing with 1, having an input receiving signal $FCH_n$ and an output delivering command signal PREM,

- a delay circuit (39) having a clock authorization input HP receiving $FZC'_n$, and a signal input receiving state signal $E'$, and an output delivering state signal $E'_1$,
- an arithmetic-logic circuit (40) having two inputs, one receiving $E'_1$ and the other $E'$ and an output delivering signal $B'$ from balancing signals $E'_1$ and $E'$, and
- finally a selector circuit (41) with a command input receiving signal PREM, two inputs receiving signals $B'$ and $E'$, and an output delivering state signal $\check{E}$ equivalent to the presence of a fork.

6. Apparatus according to claim 5 characterized in that the arithmetic-logic circuit (40) comprises:

- two adding circuits (42a) and (42b) having two inputs respectively receiving signals $NP'_1$ and $NM'_1$, regrouping certain binary elements of the state signal $E'_1$ and signals $NP'$ and $NM'$, extracted from state signal $E'$, and having an output delivering respective signals $NL'_1 = NM'_1 + NP'_1$ and $NL' = NM' + NP'$,
- a transcoder circuit (43) having two inputs receiving signals $NL'_1$ and $NL'$ and an output delivering a weighting coefficient $a$ serving to take account of the relative length of the two contours,
- an arithmetic-logic circuit (44) having three inputs receiving $a$, $E'$ and $E'_1$ and an output delivering signal $B'$.

7. Apparatus according to claim 3 characterized in that the local state-reactualization circuit (17) comprises:

- a first transcoder (45a) having two inputs receiving horizontal and vertical contour element signals $\tilde{H}$ and $\tilde{V}$ extracted from state signal $\tilde{E}$, and an output delivering signal $\tilde{\theta}$ corresponding to the absolute value of a former contour orientation angle,
- a second transcoder (45b) with two inputs receiving horizontal and vertical contour element signals $\overline{H}$ and $\overline{V}$ from circuit (15) and an output delivering a signal $\overline{\theta}$ corresponding to the absolute value of the angle of orientation of a contour under examination,
- a threshold differentiator circuit (46) having two inputs receiving signals $\tilde{\theta}$ and $\overline{\theta}$ and an output delivering signal $T\theta$,
- a comparator circuit (47) for comparing with 2, having an input receiving a signal $N\tilde{M}$ extracted from the state signal $\tilde{E}$ and representing the number of contour steps, and an output delivering signal TNM,
- an AND gate (50) having two inputs respectively receiving signals $T\theta$ and TNM and an output delivering signal $RUPT\theta$,
- an exclusive OR gate (48) having two inputs respectively receiving signal $\tilde{S}$ extracted from state signal $\tilde{E}$ and signal $\overline{S}$ extracted from circuit (16) and an output delivering signal SS,
- a combinatory circuit (49) having two inputs respectively receiving signal $\tilde{Q}$ extracted from signal $\tilde{E}$ and signal SS, and two outputs one delivering signal RUPTS, and the other signal Q,
- an OR logic circuit (51) having three inputs respectively receiving signal TI, signal $RUPT\theta$, and signal RUPTS, and one output delivering signal RUPT,
- an arithmetic-logic circuit (52) for reactualizing the state having nine inputs respectively receiving signal $\tilde{Q}$ and the signals provided by $\tilde{E}$, i.e. $N\tilde{M}$, $N\tilde{S}$, $\tilde{H}$, $\tilde{V}$ and $N\tilde{P}$, as well as observation signals $\overline{H}$, $\overline{V}$ and $\overline{S}$, and one output delivering reactualization signal EE,
- a transcoder (53) having three inputs respectively receiving signal $\overline{H}$, $\overline{V}$ and $\overline{S}$ and one output delivering initialized state signal EI,
- a selector (54) having two inputs, receiving signals EE and EI, a command input receiving signal RUPT, and an output delivering signal E.

8. Apparatus according to claim 3 characterized in that the state memory (18) comprises:

- an accumulator circuit (56a) having an input receiving signal $FZC_n$, said accumulator being activated by service signal HP and reset to zero by DL, and an output delivering signal AE,
- an accumulator circuit (57a) having an input receiving signal $FZC_n$ and activated by signal PL, and two outputs delivering signals $OE_1$ and $OE_2$,
- a mermory circuit (59) having one input receiving signal $FZC_n$ activated by HP, and an output delivering signal $FZC_{n-J}$,
- an OR circuit (58a) having two inputs receiving signals $FZC_{n-J}$ and DL and an output delivering signal OLJ,
- an accumulator (56b) having two inputs, receiving signals $FZC_{n-J}$ and DL, activated by HP, and an output delivering signal ALJ,
- an OR circuit (58b) having two inputs receiving signals $FZC'_n$ and DL activated by HP and an output delivering signal OL',
- a switching circuit (57b) having two inputs receiving signals OLJ and OL' and two outputs delivering signals $OL_1$ and $OL_2$, said switching being activated by PL,
- a switching circuit (57c) having two inputs receiving signals ALJ and AL', activated by PL, and having two outputs delivering signal $AL_1$ and $AL_2$,
- a first direct access memory (55a) activated by HP, having five inputs receiving signals AE, E, $OE_1$, $AL_1$ and $OL_1$ and an output delivering signal $e'_1$,
- a second direct access memory (55b) activated by HP, having five inputs receiving signals AE, E, $OE_2$, $AL_2$ and $OL_2$, and an output delivering signal $e'_2$,
- a switching circuit (60) activated by PL, having two inputs receiving signals $e'_1$ and $e'_2$, and two outputs delivering signals E' and EJ.

9. Apparatus according to claim 2 characterized in that circuit (13) for preparing and memorizing the prediction comprises:

- a first memory (61) having an input receiving signal $EV_n$ and an output delivering a delayed signal $EV_{n-J}$,
- an inverter circuit (63) having an input receiving $EV_{n-J}$ and delivering a complementary signal $\overline{EV}_{n-J}$,
- a second memory (62) having an input receiving signal $FZC_n$ and an output delivering a delayed signal $FZC_{n-J-1}$,
- an AND gate (64) having two inputs respectively receiving signals $\overline{EV}_{n-J}$ and $FZC_{n-J-1}$ and an output delivering $DT_{n-J}$,
- a flip-flop (65) having two inputs respectively receiving signals $EV_{n-J}$ and $DT_{n-J}$ and an output delivering signal $ZC_{n-J}$,

- an OR gate (66) having two inputs, one receiving clock signal HP and the other receiving signal $ZC_{n-J}$, and an output delivering signal OE,
- a switching circuit (67) having two inputs, one receiving clock signal HP and the other receiving signal OE, and a command input receiving signal PL, and two outputs respectively delivering signal $OEPP_1$ and signal $OEPP_2$,
- a switching circuit (68) having two inputs respectively receiving the clock signal and a null value signal 0, and a command input receiving signal PL, and two outputs respectively delivering signals $OLPP_1$ and $OLPP_2$,
- a transcoder circuit (73) having two inputs respectively receiving signals HJ and VJ extracted from state signal EJ, and two outputs, respectively delivering signal $yJ$ and signal NDECAJ,
- a comparator (75) for reference to a specific number, having an input receiving signal NDECAJ, and an output delivering signal TDECA,
- a counter (77) having an input for resetting to zero receiving service signal DL, an input receiving clock signal HP and an output delivering signal n,
- an arithmetic circuit (76) having two inputs respectively receiving signals NDECAJ and n, and an output delivering signal AEP corresponding to $n-J+NDECAJ$,
- an adder (78) having two inputs, one receiving the number n and the other the number 1, and an output delivering signal ALPP corresponding to $n+1$,
- a first switch (69a) having two inputs respectively receiving signal $PP_{n-J}$ and a null signal 0, a command input receiving service signal PL, and two outputs respectively delivering signals $pp_1$ and $pp_2$,
- a second switch (69b) having two inputs respectively receiving signals ALPP and AEP, a command input receiving service signal PL, and two outputs respectively delivering signals $AEPP_1$ and $AEPP_2$,
- a first direct access memory (70), having five inputs respectively receiving signals $OEPP_1$, $OLPP_1$, $AEPP_1$, ALPP and $pp_1$, and an output delivering signal $p_1$,
- a second direct access memory RAM (71), having five inputs respectively receiving signals $OEPP_2$, $OLPP_2$, $AEPP_2$, ALPP and $pp_2$, and an output delivering signal $p_2$, and
- a selector (79) having two inputs respectively receiving signals $p_1$ and $p_2$, a command input receiving service signal PL, and an output delivering prepared prediction signal $\overline{P}_{n+1}$.

10. Apparatus according to claim 2 characterized in that circuit (14) for final calculation of the prediction comprises:

- a decoder circuit (80) having an input receiving signal $\overline{P}_{n+1}$, said circuit detecting nullity of $\overline{P}_{n+1}$, and having an output delivering signal COM,
- a selector (81) having two inputs respectively receiving signals $\overline{P}_{n+1}$ and $\hat{X}_n$, a command input receiving signal COM, and an output delivering signal $P_{n+1}$.

11. Differential pulse code modulation coder comprising:

- a subtractor (1) having two inputs, one receiving digital sample $X_n$ and the other receiving digital prediction signal $P_n$, and an output delivering difference signal $d_n$,
- a quantifier-coder (2) receiving signal $d_n$ and delivering coded signal $C_n$,
- a quantifier decoder (4) receiving signal $C_n$ and delivering reconstructed difference signal $\hat{d}_n$,
- an adder (5) having two inputs respectively receiving signal $\hat{d}_n$ and prediction signal $P_n$ and an output delivering sample $\hat{X}_n$,
- a predictor circuit (6) receiving $\hat{X}_n$ and delivering prediction sample $P_n$,

characterized in that the predictor circuit (6) conforms to an apparatus according to any one of claims 2 to 10.

12. Differential pulse code modulation coder comprising:

- a substractor (1) having two inputs, one receiving digital sample $X_n$ and the other receiving digital prediction signal $P_n$, and an output delivering difference signal $d_n$,
- a quantifier-coder (2) receiving signal $d_n$ and delivering coded signal $C_n$,
- a quantifier (7) receiving signal $d_n$ and delivering reconstructed difference signal $\hat{d}_n$,
- an adder (5) having two inputs respectively receiving signal $\hat{d}_n$ and prediction signal $P_n$, and an output delivering sample signal $\hat{X}_n$, and
- a predictor circuit (6) receiving $\hat{X}_n$ and delivering prediction sample signal $P_n$,

characterized in that the predictor circuit (6) conforms to an apparatus according to any one of claims 2 to 10.

13. Differential pulse code modulation decoder comprising:

- a quantifier decoder (4) receiving coded sample signals $C_n$ obtained from a coder according to claim 11 or 12, said quantifier delivering a difference signal $\hat{d}_n$,

37

- an adder (5) having two inputs respectively receiving signal $\hat{d}_n$ and prediction signal $P_n$, and an output delivering sample signal $\hat{X}_n$, and
- a predictor circuit (16) receiving $\hat{X}_n$ and delivering prediction signal $P_n$,

characterized in that the predictor circuit (6) conforms to an apparatus according to any one of claims 2 to 10.

FIG. 1ₐ

FIG. 1b

FIG. 1c

FIG. 2

FIG. 3

FIG. 4

# FIG. 5

$\hat{X}_{n+1}$ → **9** MEM ← HP

**10** MEM ← HP

**11** MEM ← HP

$\hat{X}_n$ → $\hat{X}_{n-1}$ → $\hat{X}'_n$

**12** OBS. ET ESTIM. ETAT ← HP DL PL

$\hat{X}_{n-J+1}$ , $\hat{X}_{n-J}$

**13** PREPA. PREDICT. ← HP DL PL

EJ , $EV_n$ , $FZC_n$

$\bar{P}_{n+1}$ → **14** CALCUL FINAL PREDICT. → $P_{n+1}$

$\hat{X}_n$

6

FIG. 6

FIG. 7

FIG. 8

FIG. 9

FIG. 13

FIG. 10

FIG. 11

FIG. 12